# EUROPEAN PATENT SPECIFICATION

(11) **EP 3 508 028 B1**
(45) Date of publication and mention of the grant of the patent: **01.12.2021**
(21) Application number: 17765534.7
(22) Date of filing: 31.08.2017
(51) Int. Cl.: H04W 76/28, H04W 52/02, H04W 4/06, H04W 28/08, H04W 72/04, H04W 4/70, H04W 72/12

(54) **ENHANCED DISCONTINUOUS RECEPTION MANAGEMENT IN WIRELESS COMMUNICATION SYSTEMS**
VERBESSERTE HANDHABUNG VON DISKONTINUIERLICHEM EMPFANG IN DRAHTLOSKOMMUNIKATIONSSYSTEMEN
GESTION DE RÉCEPTION DISCONTINUE AMÉLIORÉE DANS DES SYSTÈMES DE COMMUNICATION SANS FIL

(30) Priority: 02.09.2016 US 201662383348 P; 30.08.2017 US 201715691495
(43) Date of publication of application: 10.07.2019
(73) Proprietor: Qualcomm Incorporated, San Diego, CA 92121-1714 (US)
(72) Inventor: CHEN, Wanshi, San Diego, CA 92121-1714 (US); GAAL, Peter, San Diego, CA 92121-1714 (US); JI, Tingfang, San Diego, CA 92121-1714 (US)
(74) Representative: Bardehle Pagenberg Partnerschaft mbB Patentanwälte Rechtsanwälte
(86) International application number: PCT/US2017/049655
(87) International publication number: WO 2018/045192

(56) References cited:
- US-A1- 2013 301 501
- US-A1- 2015 085 712
- US-A1- 2015 282 208

## Description

### CROSS REFERENCES

The present Application for Patent claims priority to U.S. Patent Application No. 15/691,495 by Chen et al., entitled "Enhanced Discontinuous Reception Management In Wireless Communication Systems," filed August 30, 2017; and to U.S. Provisional Patent Application No. 62/383,348 by Chen et al., entitled "Enhanced Discontinuous Reception Management in Wireless Communication Systems," filed September 2, 2016; each of which is assigned to the assignee hereof.

### INTRODUCTION

The following relates generally to wireless communication, and more specifically to enhanced discontinuous reception (DRX) management in wireless communication systems.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems. A wireless multiple-access communications system may include a number of base stations, each simultaneously supporting communication for multiple communication devices, which may be otherwise known as user equipment (UE).

In some examples of a wireless communication system, a base station may provide services to a group or groups of UEs (e.g., DRX timing groups). The base station may align the timing of DRX on modes of a group or groups of UEs to improve efficiency. However, if multiple UEs enter a DRX on duration and have large amounts of data traffic, the base station may be overloaded, resulting in system communication delay and reduced quality of user experience.

US 2013/301501 A1 discloses methods and apparatus to enable wireless networks to provide a long discontinuous reception (DRX) cycle or sleep length. The embodiments may allow systems and machine type communication (MTC) devices, such as a wireless transmit/receive unit (WTRU), to operate with long DRX cycles, sleep cycles, and/or periods. The embodiments may provide and/or enable MTC operations to permit infrequent system access or system reaching. The embodiments may allow MTC devices to sleep for a long period with low power consumption. The embodiments may also allow wireless networks to use an eNodeB (eNB) to perform energy saving algorithms.

US 2015/085712 A1 discloses a method comprising providing a configuration of a discontinuous reception (DRX) operation at a user equipment (UE) to handle dynamic uplink-downlink configuration changes. The method further comprises varying a DRX configuration at the UE in response to the dynamic uplink-downlink configuration changes, the DRX configuration specifying the configuration of the DRX operation.

US 2015/282208 A1 discloses methods and apparatus for supporting scheduling groups based on devices characteristics in a wireless communication system. A wireless device receives a group identification (ID) to monitor a physical downlink control channel (PDCCH) for machine type communication (MTC), receives the PDCCH with the group ID at a predetermined subframe, and configures a physical downlink shared chancel (PDSCH) and a physical uplink shared chancel (PUSCH) shared with MTC UEs by the PDCCH of grant. More efficient and accurate scheduling with lower complexity and reduction of control overhead for multi-UEs is thereby provided.

### SUMMARY

The invention relates to a method for wireless communication at a user equipment (UE) comprising: establishing a discontinuous reception (DRX) configuration comprising a first DRX on duration and a first DRX periodicity; receiving a DRX update indication on a broadcast channel, wherein the DRX update indication comprises a UE-specific indication whether a DRX on period is delayed in addition to a delay duration; identifying a DRX delay based at least in part on the DRX update indication; and entering a DRX on mode based at least in part on the DRX delay.

The invention further relates to a method for wireless communication at a base station, comprising: identifying a set of one or more user equipment (UEs), that are configured for a discontinuous reception (DRX) configuration; identifying a DRX on duration, a DRX periodicity, or a DRX delay based at least in part on the set of one or more UEs; and transmitting a DRX update indication on a broadcast channel based at least in part on the DRX on duration, the DRX periodicity, or the DRX delay, wherein the DRX update indication comprises a UE-specific indication whether a DRX on period is delayed in addition to a delay duration.

Moreover, the invention relates to an apparatus for wireless communication at a user equipment (UE) comprising: means for establishing a discontinuous reception (DRX), configuration comprising a first DRX on duration and a first DRX periodicity; means for receiving a DRX update indication a broadcast channel, wherein the DRX update indication comprises a UE-specific indication whether a DRX on period is delayed in addition to a delay duration; means for identifying a DRX delay based at least in part on the DRX update indication; and means for entering a DRX on mode based at least in part on the DRX delay.

In addition, the invention also relates to an apparatus for wireless communication at a base station, comprising: means for identifying a set of one or more user equipment (UEs), that are configured for a discontinuous reception (DRX) configuration; means for identifying a DRX on duration, a DRX periodicity, or a DRX delay based at least in part on the set of one or more UEs; and means for transmitting a DRX update indication on a broadcast channel based at least in part on the DRX on duration, the DRX periodicity, or the DRX delay, wherein the DRX update indication comprises a UE-specific indication whether a DRX on period is delayed in addition to a delay duration.

Advantageous embodiments of the invention are set out in the dependent claims.

Finally, the invention relates to one or more computer programs for implementing the methods according to the invention.

### BRIEF DESCRIPTION OF THE DRAWINGS

FIGs. 1 and 2 illustrate examples of systems for wireless communication that support enhanced DRX management in wireless communication systems in accordance with one or more aspects of the present disclosure.
FIG. 3 illustrates an example of a downlink (DL) centric subframe configuration that supports enhanced DRX management in wireless communication systems in accordance with one or more aspects of the present disclosure.
FIG. 4 illustrates an example of an uplink (UL) centric subframe configuration that supports enhanced DRX management in wireless communication systems in accordance with one or more aspects of the present disclosure.
FIG. 5 illustrates an example of a subframe structure that supports enhanced DRX management in wireless communication systems in accordance with one or more aspects of the present disclosure.
FIG. 6 illustrates an example of DRX update scheduling that supports enhanced DRX management in wireless communication systems in accordance with one or more aspects of the present disclosure.
FIG. 7 illustrates an example of a process flow that supports enhanced DRX management in wireless communication systems in accordance with one or more aspects of the present disclosure.
FIGs. 8 through 10 show block diagrams of a device that supports enhanced DRX management in wireless communication systems in accordance with one or more aspects of the present disclosure.
FIG. 11 illustrates a block diagram of a system including a UE that supports enhanced DRX management in wireless communication systems in accordance with one or more aspects of the present disclosure.
FIGs. 12 through 14 show block diagrams of a device that supports enhanced DRX management in wireless communication systems in accordance with one or more aspects of the present disclosure.
FIG. 15 illustrates a block diagram of a system including a base station that supports enhanced DRX management in wireless communication systems in accordance with one or more aspects of the present disclosure.
FIGs. 16 through 19 illustrate methods for enhanced DRX management in wireless communication systems in accordance with one or more aspects of the present disclosure.

### DETAILED DESCRIPTION

In some examples of a wireless communication system, a base station may provide services to several UEs. If DRX durations and DRX periodicities corresponding to the group or groups of UEs are not aligned, the base station may be constantly in an awake mode to provide services to various UEs that have entered a DRX on mode at different times. Instead, the base station may align the timing of DRX on modes of a group or groups of UEs to improve efficiency (e.g., via downlink control information (DCI)). However, if multiple UEs enter a DRX on duration at the same time, and have large amounts of data traffic, the base station may become overloaded, resulting in decreased quality of user experience. Enhanced DRX configuration management may thus facilitate effective communication via management of multiple UE DRX on durations while maintaining control resource load conditions.

In some examples, a wireless communication system (for example, a 5G system) may include base stations (e.g., small cells) designed to support a smaller number of UEs per base station. In such systems, providing multiple simultaneous services to a large number of UEs may be associated with system overload and thus, communication latency. The UEs' DRX configurations, including a DRX on duration and a DRX periodicity, may be aligned to both decrease battery power consumption of the UEs and base station, and to improve the quality of services provided. Therefore, in some cases, a base station may adjust the timing of DRX on durations corresponding to multiple UEs. Aligning the DRX on durations may allow the base station to serve the UEs efficiently, and to potentially align its own sleep duration with the UE DRX off duration. However, if a large number of UEs enter a DRX on mode and have traffic to be served by the base station, then serving all the UEs during relatively few DRX on durations may be inefficient and costly.

In some cases, wireless communication systems may support flexible subframe structure and subframe duration. Thus, control regions may be distributed with more flexibility (e.g., with respect to time and frequency resources) in a system that provides larger bandwidth (e.g., 5G communication systems). In such systems, control regions may be limited to small fractions of the frequency domain or time domain. In such scenarios, a UE may only monitor a small fraction of bandwidth for potential signaling reception. In some cases, control resource conditions may be managed according to such flexibility. For example, if a base station has sufficient control resources available to send UE-specific signals to all or many UEs in a given cell or DRX timing group, then a base station may send a UE-specific signal to each UE to delay or extend its DRX on duration to a time when the base station is able to provide better service (e.g., when the base station has fewer UEs requesting services).

However, in some cases, a base station may be serving a high number of UEs, and may not have sufficient control resources to send UE-specific signals to all or many UEs in a given group. Thus, a base station may send a DRX update indication on a broadcast channel. A base station and a group or groups of UEs may establish a DRX configuration, which may include a DRX on duration and a DRX periodicity. The base station may identify a group or groups of UEs in a DRX configuration (e.g., groups of UEs to have similar DRX timing), and may further determine a control resource load condition. The base station then broadcasts a DRX update indication based on the identified group or determined resource load condition. The DRX update indication includes, according to examples not covered by the claims, a new DRX on duration, or a new DRX periodicity, or, according to the invention, a new DRX delay. A UE receives the DRX update indication on a broadcast channel (*e.g.,* based on a group RNTI or common search space). The UE enters a DRX on mode based on the DRX update information. Aspects of the disclosure may also be applied to system operation of DTX modes.

Aspects of the disclosure are initially described in the context of a wireless communications system. Examples of wireless systems supporting enhanced DRX management in addition to example subframe configurations, DRX timing management, and process flows are then described. Aspects of the disclosure are further illustrated by and described with reference to apparatus diagrams, system diagrams, and flowcharts that relate to enhanced DRX management in NR.

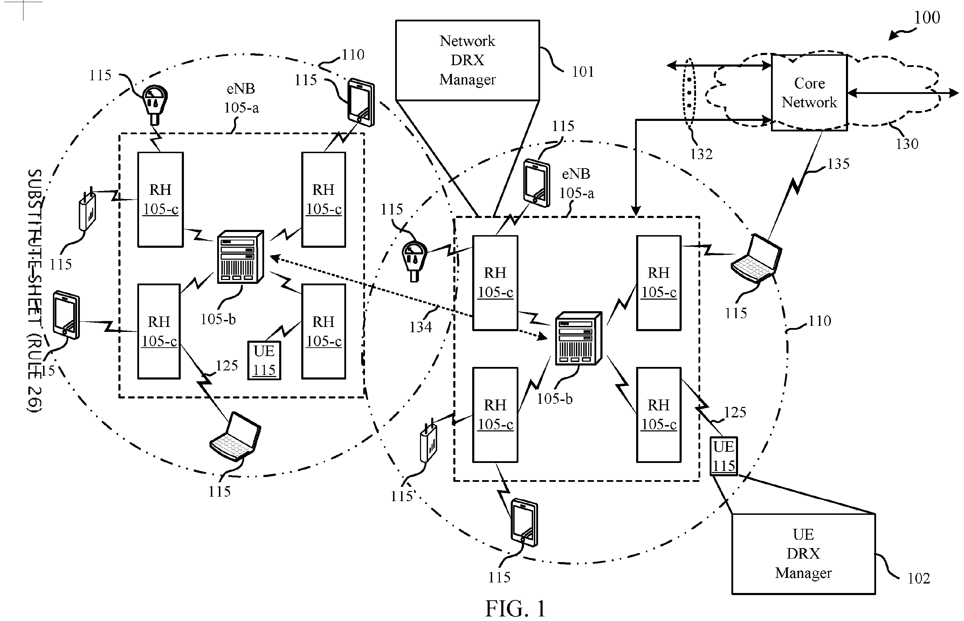

**FIG. 1** illustrates an example of a wireless communications system 100, in accordance with one or more aspects of the disclosure. The wireless communications system 100 may include base stations 105 (e.g., gNodeBs (gNBs), and/or radio heads (RHs)), UEs 115, and a core network 130. Wireless communications system 100 may support dynamic receive opportunity (RO) and transmit opportunity (TO) configurations to enable reduced latency and reduced power consumption. For example, wireless communications system 100 may support a TO following the reception of data during the on duration of a DRX configuration. Additionally or alternatively, a subsequent RO may follow the transmission of data during the on duration of a DTX configuration.

Base stations 105 may wirelessly communicate with UEs 115 via one or more base station antennas. Each base station 105 may provide communication coverage for a respective geographic coverage area 110. Communication links 125 shown in wireless communications system 100 may include UL transmissions from a UE 115 to a base station 105, or DL transmissions, from a base station 105 to a UE 115. A UE 115 may communicate with the core network 130 through communication link 135. UEs 115 may be dispersed throughout the wireless communications system 100, and each UE 115 may be stationary or mobile. A UE 115 may also be referred to as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The UEs 115 may be dispersed throughout the wireless communications system 100, and each UE 115 may be stationary or mobile. A UE 115 may also include or be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wireless local loop (WLL) station, a IoE device, a machine type communication (MTC) device, an appliance, an automobile, or the like. A UE may be able to communicate with various types of base stations 105-a, base stations 105-c, base stations 105, access points, or other network devices, including macro eNBs, small cell eNBs, relay base stations, and the like, which may be referred to interchangeably. A UE may also be able to communicate directly with other UEs *(e.g.,* using a peer-to-peer (P2P) protocol).

Base stations 105 may communicate with the core network 130 and with one another. For example, base stations 105 may interface with the core network 130 through backhaul links 132 *(e.g.,* S1, etc.). Base stations 105 may communicate with one another over backhaul links 134 *(e.g.,* X2, etc.) either directly or indirectly *(e.g.,* through core network 130). Base stations 105 may perform radio configuration and scheduling for communication with UEs 115, or may operate under the control of a base station controller (not shown). In some examples, base stations 105 may be macro cells, small cells, hot spots, or the like. Base stations 105 may also be referred to as eNodeBs (eNBs) 105.

The core network 130 may provide user authentication, access authorization, tracking, Internet Protocol (IP) connectivity, and other access, routing, or mobility functions. At least some of the base stations 105 *(e.g.,* base station 105-a, which may be an example of an eNB or a base station, or base station 105-b, which may be an example of an access node controller (ANC)) may interface with the core network 130 through backhaul links 132 *(e.g.,* S1, S2, etc.) and may perform radio configuration and scheduling for communication with the UEs 115. In various examples, the base stations 105-b may communicate, either directly or indirectly *(e.g.,* through core network 130), with each other over backhaul links 134 *(e.g.,* X1, X2, etc.), which may be wired or wireless communication links.

Each base station 105-b may also communicate with a number of UEs 115 through a number of other base stations 105-c, where base station 105-c may be an example of a base station 105 with a smart radio head. In alternative configurations, various functions of each base station 105 may be distributed across various network components of a base station 105 *(e.g.,* radio heads and access network controllers) or consolidated into a single base station 105.

A macro cell may cover a relatively large geographic area (e.g., several kilometers in radius) and may allow unrestricted access by UEs 115 with service subscriptions with a network provider. A small cell may include a lower-powered radio head or base station, as compared with a macro cell, and may operate in the same or different frequency band(s) as macro cells. Small cells may include pico cells, femto cells, and micro cells according to various examples. A pico cell may cover a relatively smaller geographic area and may allow unrestricted access by UEs 115 with service subscriptions with a network provider. A femto cell also may cover a relatively small geographic area *(e.g.,* a home) and may provide restricted access by UEs 115 having an association with the femto cell *(e.g.,* UEs in a closed subscriber group (CSG), UEs for users in the home, and the like). An eNB for a macro cell may be referred to as a macro eNB. An eNB for a small cell may be referred to as a small cell eNB, a pico eNB, a femto eNB or a home eNB. An eNB may support one or multiple (e.g., two, three, four, and the like) cells (e.g., component carriers). A gNB for a macro cell may be referred to as a macro gNB. A gNB for a small cell may be referred to as a small cell gNB, a pico gNB, a femto gNB, or a home gNB. A gNB may support one or multiple (e.g., two, three, four, and the like) cells (e.g., component carriers). A UE may be able to communicate with various types of base stations and network equipment including macro eNBs, small cell eNBs, relay base stations, and the like.

Wireless communications system 100 may support operation on multiple cells or carriers, a feature which may be referred to as carrier aggregation (CA) or multi-carrier operation. A carrier may also be referred to as a component carrier (CC), a layer, a channel, etc. The terms "carrier," "component carrier," "cell," and "channel" may be used interchangeably herein. A UE 115 may be configured with multiple DL CCs and one or more UL CCs for carrier aggregation. Carrier aggregation may be used with both FDD and TDD component carriers.

In some cases, wireless communications system 100 may utilize enhanced component carriers (eCCs). An eCC may be characterized by one or more features including: wider bandwidth, shorter symbol duration, shorter transmission time interval (TTIs), and modified control channel configuration. In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (where more than one operator is allowed to use the spectrum). An eCC characterized by wide bandwidth may include one or more segments that may be utilized by UEs 115 that are not capable of monitoring the whole bandwidth or prefer to use a limited bandwidth (e.g., to conserve power).

In some cases, an eCC may utilize a different symbol duration than other CCs, which may include use of a reduced symbol duration as compared with symbol durations of the other CCs. A shorter symbol duration is associated with increased subcarrier spacing. A device, such as a UE 115 or base station 105, utilizing eCCs may transmit wideband signals *(e.g.,* 20, 40, 60, 80 Mhz, etc.) at reduced symbol durations *(e.g.,* 16.67 microseconds). A TTI in eCC may consist of one or multiple symbols. In some cases, the TTI duration (that is, the number of symbols in a TTI) may be variable. In some cases, an eCC may utilize a different symbol duration than other CCs, which may include use of a reduced symbol duration as compared with symbol durations of the other CCs. A shorter symbol duration is associated with increased subcarrier spacing. A device, such as a UE 115 or base station 105, utilizing eCCs may transmit wideband signals *(e.g.,* 20, 40, 60, 80 Mhz, etc.) at reduced symbol durations (e.g., 16.67 microseconds). A TTI in eCC may consist of one or multiple symbols. In some cases, the TTI duration (that is, the number of symbols in a TTI) may be variable.

Wireless communications system 100 may operate in an ultra high frequency (UHF) or millimeter wave (mmW) frequency region using frequency bands from 700 MHz to 2600 MHz (2.6 GHz), although in some cases WLAN networks may use frequencies as high as 4 GHz. This region may also be known as the decimeter band, since the wavelengths range from approximately one decimeter to one meter in length. UHF waves may propagate mainly by line of sight, and may be blocked by buildings and environmental features. However, the waves may penetrate walls sufficiently to provide service to UEs 115 located indoors. Transmission of UHF waves is characterized by smaller antennas and shorter range *(e.g.,* less than 100 km) compared to transmission using the smaller frequencies (and longer waves) of the high frequency (HF) or very high frequency (VHF) portion of the spectrum. In some cases, wireless communications system 100 may also utilize extremely high frequency (EHF) portions of the spectrum (e.g., from 30 GHz to 300 GHz). This region may also be known as the millimeter band, since the wavelengths range from approximately one millimeter to one centimeter in length. Thus, EHF antennas may be even smaller and more closely spaced than UHF antennas. In some cases, this may facilitate use of antenna arrays within a UE 115 *(e.g.,* for directional beamforming). However, EHF transmissions may be subject to even greater atmospheric attenuation and shorter range than UHF transmissions.

Thus, wireless communications system 100 may support UHF or mmW communications between UEs 115 and base stations 105. mmW devices (e.g., UEs 115 and base station 105) may have multiple antennas to allow beamforming. That is, a base station 105 may use multiple antennas or antenna arrays to conduct beamforming operations for directional communications with a UE 115. Beamforming (which may also be referred to as spatial filtering) is a signal processing technique that may be used at a transmitter (*e.g*. a base station 105) to shape and/or steer an overall antenna beam in the direction of a target receiver *(e.g.* a UE 115). This may be achieved by combining elements in an antenna array in such a way that transmitted signals at particular angles experience constructive interference while others experience destructive interference. Multiple-input multiple-output (MIMO) wireless systems use a transmission scheme between a transmitter (*e.g*. a base station) and a receiver *(e.g.* a UE), where both transmitter and receiver are equipped with multiple antennas. Some portions of wireless communications system 100 may use beamforming. For example, base station 105 may have an antenna array with a number of rows and columns of antenna ports that the base station 105 may use for beamforming in its communication with UE 115. In some cases, signals may be transmitted multiple times in different directions (e.g., each transmission may be beamformed differently).

The wireless communications system 100 may support synchronous or asynchronous operation. For synchronous operation, the base stations 105-a and/or base stations 105-c may have similar frame timing, and transmissions from different base stations 105-a and/or base stations 105-c may be approximately aligned in time. For asynchronous operation, the base stations 105-a and/or base stations 105-c may have different frame timings, and transmissions from different base stations 105-a and/or base stations 105-c may not be aligned in time. The techniques described herein may be used for either synchronous or asynchronous operations.

The communication links 125 shown in wireless communications system 100 may include UL channels from a UE 115 to a base station 105-c, and/or DL channels, from a base station 105-c to a UE 115. The DL channels may also be called forward link channels, while the UL channels may also be called reverse link channels. Control information and data may be multiplexed on an UL channel or DL according to various techniques. Control information and data may be multiplexed on a DL channel, for example, using TDM techniques, FDM techniques, or hybrid TDM-FDM techniques. In some examples, the control information transmitted during a TTI of a DL channel may be distributed between different control regions in a cascaded manner (e.g., between a common control region and one or more UE-specific control regions).

In some cases, a UE 115 may monitor a communication link 125 continuously for an indication that the UE 115 may receive data. In other cases *(e.g.,* to conserve power and extend battery life) a UE 115 may be configured with a DRX or DTX cycle. A DRX cycle consists of an "on duration" when the UE 115 may monitor for control information (e.g., on PDCCH) and a "DRX period" when the UE115 may power down radio components. A DTX cycle consists of an "on duration" when the UE 115 may transmit a scheduling request and a "DTX period" when the UE115 may power down radio components. In some cases, a UE 115 may be configured with a short DRX or DTX cycle and a long DRX or DTX cycle. In some cases, a UE 115 may enter a long DRX or DTX cycle if it is inactive for one or more short DRX or DTX cycles. The transition between the short DRX or DTX cycle, the long DRX or DTX cycle and continuous reception may be controlled by an internal timer or by messaging from a base station 105.

One or more of base stations 105 may include a network DRX manager 101, which may identify a set of one or more UEs that are configured for a DRX configuration, identify a DRX on duration, a DRX periodicity, or a DRX delay based on the set of one or more UEs, and transmit a DRX update indication on a broadcast channel based on the DRX on duration, the DRX periodicity, or the DRX delay. In the present invention, the transmitted DRX update indication comprises a UE-specific indication whether a DRX on period is delayed in addition to a delay duration. UEs 115 may include a UE DRX manager 102, which establishes a DRX configuration (*e.g*., a DRX on duration and a DRX periodicity), receives a DRX update indication on a broadcast channel, identifies, according to some examples not covered by the claims, a new DRX on duration, or a new DRX periodicity, or, according to the invention, a DRX delay based on the DRX update indication. The UE DRX manager 102 may then facilitate a DRX on mode based on the DRX update indication.

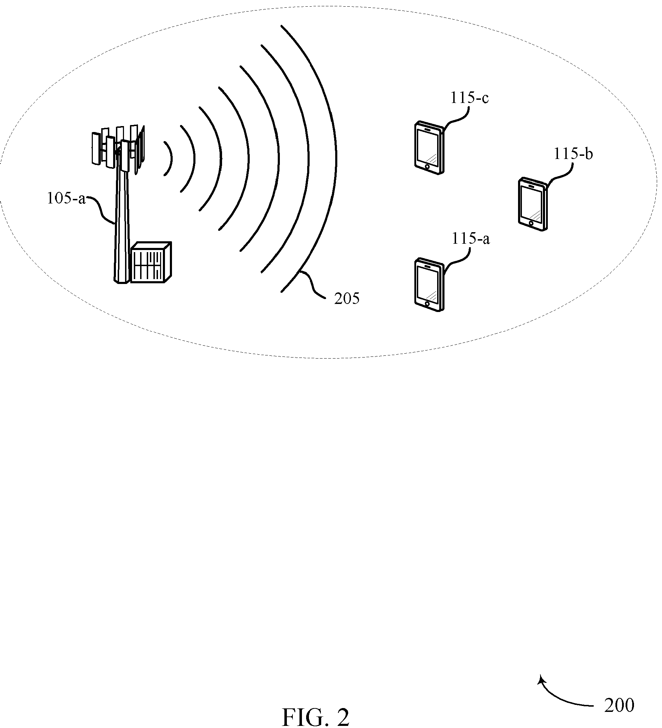

**FIG. 2** illustrates an example of a wireless communications system 200 for sending a DRX update indication on a broadcast channel (e.g., via broadcast 205 using, for example, a physical broadcast channel (PBCH)) in accordance with one or more aspects of the present disclosure. Wireless communications system 200 may include a base station 105-a which may be examples of a base station 105 as described with reference to FIG 1. Further, wireless communications system 200 may include UEs 115-a, UE 115-b, and UE 115-c which may be examples of a UE 115 as described with reference to FIG 1.

Base station 105-a may engage in DRX management by sending DRX update information to specific UEs 115, or to a DRX timing group of one or more UEs 115. In some cases, base station 105-a may not be able to expend the control resources necessary to send multiple UE-specific signals *(e.g.,* in scenarios where a large number of UEs 115 would receive a UE-specific indication). Instead, a base station 105-a may send UE-specific indications via a group grant or a broadcast 205. In some cases, a UE 115-a may be configured with a DRX periodicity and DRX on duration. Upon entering a DRX on mode, a UE 115-a may monitor for the following types of signals. A UE 115-a may detect a UE-specific grant, which could be a DL grant or an UL grant. In such cases, the UE 115-a may begin to transmit (*e.g.,* according to the UL grant) or receive (*e.g.,* according to the DL grant). In some cases, the UE 115-a may detect a UE-specific indication of whether or not a DRX on period is delayed. Such an indication may be received via a UE-specific grant or via a group grant where a UE-specific index in the grant is used for UE-specific indication (*e.g*., similar to group power control DCI formats 3/3A in LTE). In the present invention, the UE 115-a receives a DRX update indication via a broadcast 205. This DRX update identifies, according to some examples not covered by the claims, a different DRX on duration, a different DRX periodicity, or, according to the invention, a DRX delay. Base station 105-a may send a broadcast by using a single broadcast channel for all UEs, or by using multiple broadcast channels, corresponding to each group of UEs 115. In such cases, the grouping of UEs 115 may be high-layer configured, or implicitly derived (e.g., based on RNTI). Furthermore, the payload in the broadcast 205 may include one or more bits for the DRX indication.

In the present invention, a UE 115-a updates a DRX configuration based on a DRX update indication received via the broadcast channel (e.g., broadcast 205). If a UE 115-a enters a DRX on period, it may perform the following actions. A UE 115-a may receive a UE-specific indication. In such cases, UE 115-a may enter a DRX on duration according to the UE-specific DRX update indication. For example, a UE 115-a may be delayed by 0.5 ms, and UE 115-b may be delayed by 1 ms, such that UEs 115-a and UE 115-b DRX on durations are distributed into different subframes, thereby achieving load balancing. Additionally, a UE 115-a may detect a broadcast 205. In such cases, the broadcast 205 may indicate that the UE 115-a must delay its DRX on period by a predefined duration. This information may be transmitted using a one bit indicator. In some cases, broadcast 205 may indicate that the UE 115-a must delay its DRX period by an indicated duration. This information may be transmitted using an indicator which includes more than one bit. Otherwise, a DRX on duration may begin, but the UE 115-a may not be scheduled. Alternatively, if broadcast 205 contains 1 bit and is not detected by the UE 115-a, then broadcast 205 may indicate for the UE 115-a to delay a DRX on duration by a predefined duration.

UE-specific scheduling, UE-specific indications, and group indications may be applied to greater affect in varying scenarios. For example, UE-specific scheduling may be based on actual traffic needs in a system. Alternatively, UE-specific indication may be enabled when there is enough control resource available. Finally, group indication may be necessary for load balancing when control resources are insufficient, or inefficient (e.g., when control resources are insufficient for UE-specific indications for several UEs served by the base station).

In some examples, wireless communications system 200 may experience delays when base station 105-a provides multiple simultaneous services to a large number of UEs 115. The UEs 115 may have a DRX configuration, which may include a DRX on duration and a DRX periodicity. For example, UEs 115-a, 115-b, and 115-c may have DRX configurations which are aligned to decrease battery power consumption in the base station 105-a and/or improve the quality of services provided. However, if multiple UEs 115 simultaneously enter a DRX on duration and have large amounts of data traffic, the base station 105-a may become overloaded, resulting in decreased quality of user experience. In some cases, a base station 105-a may send UE-specific signals to each of UE 115-a, UE 115-b, and UE 115-c, which may indicate a delay or extension of its DRX on duration.

In other examples, in wireless communications system 200 *(e.g.,* operating as a 5G system) a base station 105-a may not have the capacity to expend control resources on individual indications (*e.g*., on UE-specific indications) for each UE 115. Instead, base station 105-a may send a broadcast to a group or groups of UEs 115 (*e.g.,* UEs 115-a, 115-b, and 115-c), indicating a DRX update (*e.g*., according to the invention, a delay or, according to an example not covered by the claims, extension of the DRX on duration). In some cases, DRX indications included in the broadcast may be individually specific to each UE 115 (*e.g.,* UEs 115-a, 115-b, and 115-c). In other cases, DRX indications included in the broadcast may apply to a group of UEs 115 (*e.g.,* to one or more of UEs 115-a, 115-b, and 115-c).

Group specific DRX indications may be realized using control regions more flexibly distributed in systems (e.g., wireless communications system 200) that provide a larger bandwidth. In some systems (e.g., Long Term Evolution (LTE) systems), a control region may be distributed across the entire bandwidth of a signal. However, in other scenarios *(e.g.,* wireless communications system 200), bandwidth may be very large *(e.g.,* 40 MHz or 80MHz). Thus, it may not be necessary to have a control region fully distributed across the entirety of the frequency domain. Control regions may be limited to portions of the frequency domain or time domain. In such scenarios, UE 115-a may only monitor a fraction of the bandwidth for potential control signaling. Such an approach may limit battery power consumption at the UE 115-a in addition to allowing a broadcast to include multiple DRX indications corresponding to different UEs or different groups of UEs. Control regions may include a variety of information. For example, control regions may carry information indicating the subframe structure. Additionally, control regions may provide UL or DL scheduling, or some indication for future compatible operations.

In some cases, base station 105-a may adjust the timing of DRX on modes corresponding to multiple UEs 115. Generally, UEs 115 may enter a DRX on mode in order to minimize battery power consumption. In a DRX on mode, UE 115s may wake up and monitor for signals from the base station 105-a. However, multiple UEs 115 *(e.g.,* UE 115-a, UE 115-b, and UE 115-c) may enter a DRX on mode at the same time. Base station 105-a may desire to avoid such a scenario. That is, if UE 115-a, UE 115-b, and UE 115-c are served by the cell, a base station 105-a may wish to stagger the timing of the multiple DRX on modes to avoid handling too many UEs 115 in a given amount of time *(e.g.,* to avoid providing different services to UE 115-a, UE 115-b, and UE 115-c simultaneously). However, if a base station 105-a staggers the timing of UE 115-a, UE 115-b, and UE 115-c DRX on durations to avoid such overloading, base station 105-a may spread out services to be provided over time by updating UE 115-a, UE 115-b, and UE 115-c DRX timing. Additionally, some UEs 115 may be scheduled to enter a DRX on mode, but may have no traffic to transmit.

In some cases, a base station 105-a may align the DRX on duration for all UEs 115 to which it provides service. Aligning the DRX on duration may allow the base station 105-a to serve the UEs 115 efficiently, and to align its sleep duration with the UEs 115 DRX off duration. Upon entering the aligned DRX on duration, the base station 105-a may be able to serve all UEs 115 with traffic efficiently and without unreasonable battery power consumption (e.g., in scenarios where the number of UEs served is relatively small). However, if large number of UEs 115 have traffic to be served by the base station 105-a, then serving all the UEs 115 during simultaneous DRX on durations may be associated with communication delays. In some situations, if a relatively large number of UEs 115 have traffic and are scheduled for simultaneous DRX on durations, base station 105-a may send a UE-specific signal to one or more of UE 115-a, UE 115-b, or UE 115-c to, according to the invention, delay or, according to an example not covered by the claims, extend a DRX on duration to a time when the base station 105-a is able to provide better service. The UE 115 may then, according to an example not covered by the claims, extend its DRX on duration, or, according to the invention, go back to sleep and wake up for a DRX on mode at a later time. In some cases, base station 105-a may have sufficient control resources to send UE-specific signals indicating extension or delay of DRX on periods for each UE 115. However, in other cases, a base station 105-a may not have sufficient control resources to send UE-specific signals to all or many UEs 115 in a given cell and may utilize group or broadcast based DRX update indications.

Approaches to DRX management may focus on DL DRX. One approach to DRX management includes introducing a gap between on-duration and data duration to enable offline processing in a Connected mode. An O-DRX message may indicate when to wake up for data. Such a message may be subject to a sufficient gap for offline processing. For example, if the gap may be greater than some minimum time required for offline processing of a message. Additionally, a UE 115 may introduce a micro DRX (M-DRX). In such an example, a base station 105 may dynamically signal to the UE 115 when to wake up to receive data. Within a DRX cycle, the base station 105-a may allow the device to sleep between periods of data activity. For example, the DRX cycle may be based on network load, scheduling delays, or on service latency requirements, tolerance, and/or traffic profiles.

Additional approaches to DRX management may focus on UL DRX. In an UL DRX management scenario, a UE 115 may only be permitted to transmit at certain opportunities. The UE 115 may enter DRX on mode, but a base station 105 may instruct the UE 115 to wait until the next UL TO to transmit or request transmission of data. An UL TO may be pre-defined *(e.g.* based on UL DRX cycle) and also dynamically allocated *(e.g.,* analogous to M-DRX on DL). This approach may maximize overlap between DL and UL DRX occasions for UE 115 power savings. Predefined and dynamically allocated TOs of different UEs 115 may overlap for network power savings. An UL TO may also be based on prior performance.

One approach to DRX management focuses on service specific reception and transmission. In this approach a base station 105 may address service specific receive on transmit (Rx on Tx). In such scenarios, a base station 105 may configure a UE 115 to determine whether to receive continuously on DL (or UL) in response to a transmission on UL (or DL). In these cases, the receiver may know if a sender is listening and/or awake, based on received packets service requirements.

Additional approaches to DRX management focus on low power receivers (LP-Rx) and millimeter wave aggregation. A DRX mode may be designed with a companion low power receiver (LP-Rx). A UE 115 may have a full-power receiver, which may be in a deep sleep. The UE 115 may have a companion LP-Rx which may be turned on and may monitor wake-up (WU) signals from Smart Radio Head. Upon reception of the WU signal by the LP-Rx, the full power modem may exit sleep mode and receive data *(e.g.,* the wireless device may power additional receiver circuitry to receive data). Another approach to DRX management includes Sub-6 Mhz mmW aggregation. Such an approach may include independent DRX parameters and operation, or joint DRX parameters and operations.

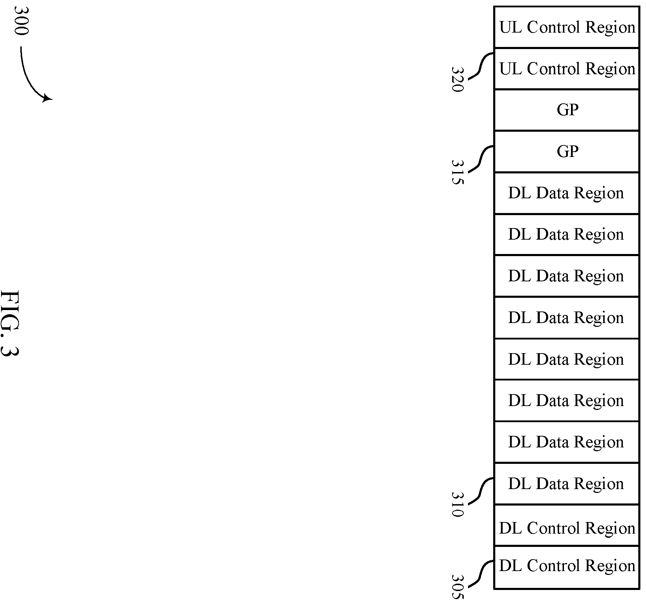

**FIG. 3** illustrates an example of a DL centric subframe configuration 300 in accordance with one or more aspects of the present disclosure. In some cases, DL centric subframe configuration 300 may represent aspects of techniques performed by a UE 115 or base station 105 as described with reference to FIGs. 1-2. In some examples, subframe structure may be flexible and subframe duration may be flexible. DL centric subframe configuration 300 may include an all DL configuration, and multiple switching points (DL to UL or UL to DL switching), etc. In some scenarios, each region of DL centric subframe configuration 300 may be variable in size, but total configuration may be limited for efficient signaling (e.g., a certain length for scheduling purposes). DL centric subframe configuration 300 may include flexible regions (e.g., variable in length or duration) that include DL control region symbols 305, DL data region symbols 310, guard period symbols 315, and UL control region symbols 320. For example, the first two symbols of example DL centric subframe configuration 300 may include a DL control region. The last two symbols of DL centric subframe configuration 300 may include an UL control region. In some cases, DL control region symbols 305 and UL control region symbols 320 may not be originally dedicated for control, however, they may be primarily used for control. Thus, the control regions may not be subject to interference between different link directions. DL centric subframe configuration 300 may thus facilitate high quality interference management. Data regions may be flexible, in duration and in resource allocation. In some cases, the entire subframe may be dedicated to only DL directional links or symbols.

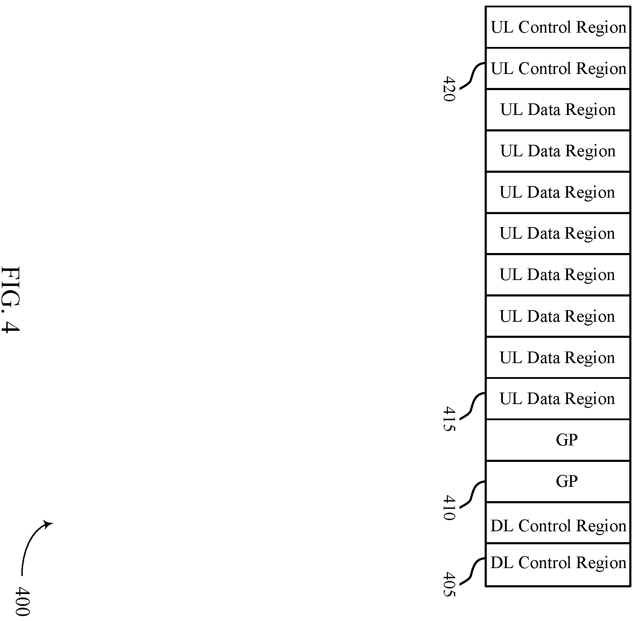

**FIG. 4** illustrates an example of an UL centric subframe configuration 400 in accordance with one or more aspects of the present disclosure. In some cases, UL centric subframe configuration 400 may represent aspects of techniques performed by a UE 115 or base station 105 as described with reference to FIGs. 1-3. In some examples, subframe structure may be flexible and subframe duration may be flexible. UL centric subframe configuration 400 may include one or more symbol configurations and, in some cases, may be an all UL configuration. UL centric subframe configuration 400 may further include multiple switching points (DL to UL or UL to DL switching points), etc. In some scenarios, each region of UL centric subframe configuration 400 may be variable in size. UL centric subframe configuration 400 may include flexible regions such as DL control region symbols 405, guard period symbols 410, UL data region symbols 415, and UL control region symbols 420. For example, the first two symbols of UL centric subframe configuration 400 may include DL control regions. The last two symbols of UL centric subframe configuration 400 may include UL control regions. In some cases, these symbols may not be dedicated for control, however, they may be primarily used for control. Thus, the control regions may not be subject to interference between different link directions. UL centric subframe configuration 400 may thus provide high quality interference management. Data regions may be flexible, in duration and in resource allocation. In some cases, the entire subframe may be dedicated to only UL directional links or symbols.

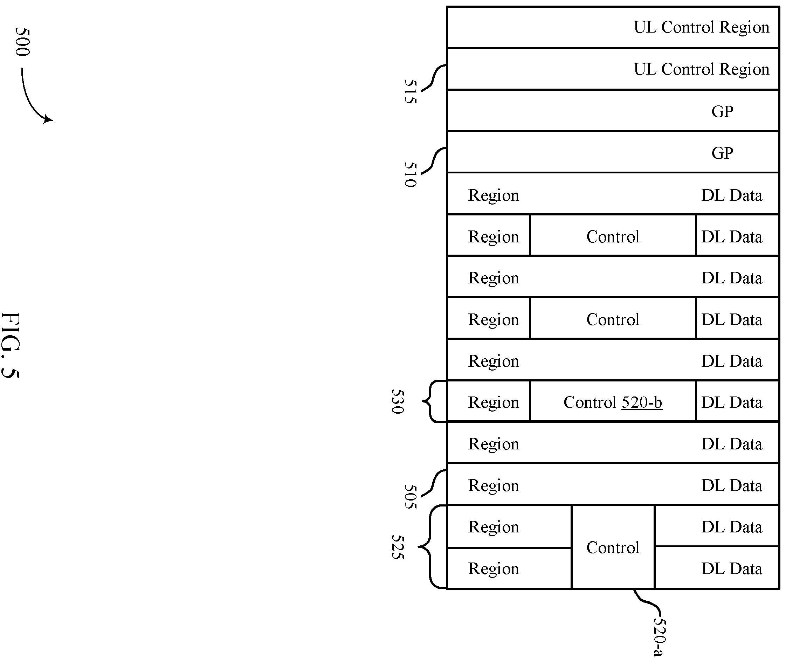

**FIG. 5** illustrates an example of subframe structure 500 in accordance with one or more aspects of the present disclosure. In some cases, subframe structure 500 may represent aspects of techniques performed by a UE 115 or base station 105 as described with reference to FIGs. 1-4. In some examples, control regions may be more flexibly distributed in systems that provide a higher bandwidth (for example, in a 5G system). In some wireless communication systems (e.g., an LTE system), a control region may be distributed across the entire bandwidth of a signal. However, in some scenarios, available bandwidth may be very large *(e.g.,* 40 MHz or 80MHz). In such scenarios, it may not be necessary to have a control region fully distributed across the entirety of the frequency domain. In some cases, subframe structure 500 may include DL data region symbols 505, guard period symbols 510, and UL control region symbols 515. Control regions 520 may be limited to portions (e.g., in frequency and/or time) of such symbols. For example, control region 520-a may not be fully distributed across the entirety of the frequency domain of duration 525, but duration 525 may include two DL data region symbols 505. In other examples, control region 520-b may not be fully distributed across the entirety of the frequency domain, but may span a larger frequency region than control region 520-a. Further, duration 530 may span a different time duration than duration 525 *(e.g.,* may span a single DL data region symbol 505). In such scenarios of flexible control regions, a UE 115 may only monitor a small fraction of bandwidth for potential signal reception (e.g., corresponding to the time and frequency resources associated with a control region 520). Such an approach may limit battery power consumption at the UE 115. Control regions 520-a and 520-b may include a variety of information. For example, control regions 520-a and 520-b may carry information indicating the subframe structure. Additionally, control regions 520-a and 520-b may provide UL or DL scheduling, or some indication for future compatible operations.

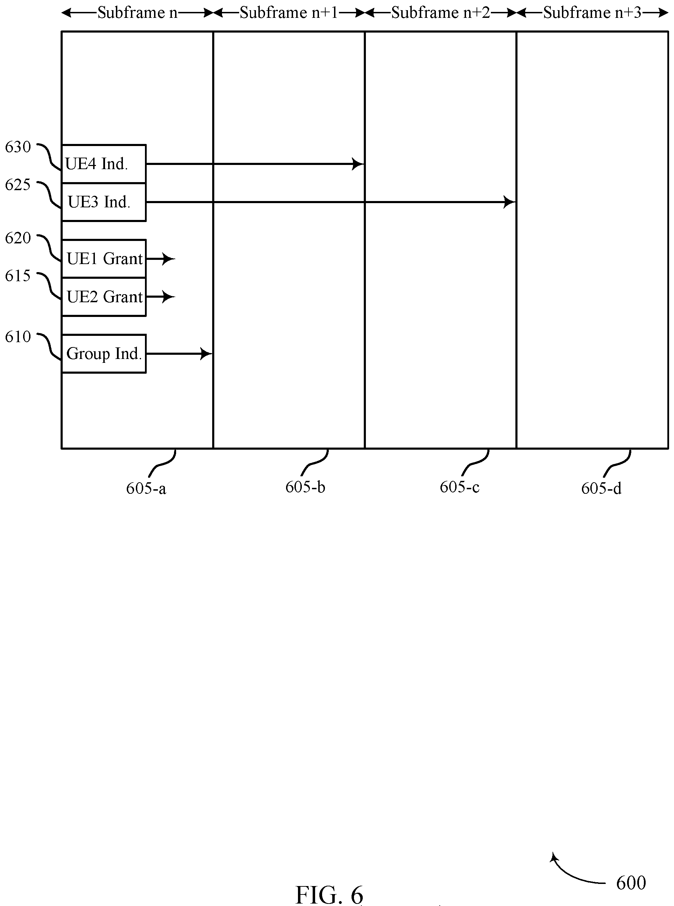

**FIG. 6** illustrates an example of DRX update scheduling 600 in accordance with one or more aspects of the present disclosure. In some cases, DRX update scheduling 600 may represent aspects of techniques performed by a UE 115 or base station 105 as described with reference to FIGs. 1-5. In DRX update scheduling 600, a base station 105 may engage in DRX management by sending UE-specific, group, or broadcast indications. In some cases, a base station 105 may not be able to expend the control resources necessary to send multiple UE-specific signals. Instead, a base station 105 may send DRX indications via a group grant or a broadcast. In some cases, a UEs 115 may be configured with a DRX periodicity and DRX on duration. Upon entering a DRX on mode, a UE 115 may monitor for the following types of signals, and respond accordingly.

Some UEs 115 *(e.g.,* UEs 1 and 2) may detect UE-specific grants 615 and 620, either of which could be a DL grant or an UL grant. If such is the case, the UEs 115 may begin to transmit or receive in subframe 605-a (e.g., Subframe n). Additionally, UEs 3 and 4 detect UE-specific indications 625 and 630 which, according to the invention, indicate whether or not a DRX on period is delayed in addition to the duration of such delay. Such an indication could be received via a UE-specific grant or via a group grant where a UE-specific index in the grant is used for UE-specific indication. This may be similar to group power control DCI formats 3/3A in LTE. In these scenarios, UEs 3 and 4 delay entering a DRX on mode until subframe 605-c (*e.g.,* Subframe n+2) and subframe 605-d (*e.g.,* Subframe n+3), as illustrated. In some cases, a group of UEs 115 may receive a group DRX update indication 610 via a groupcast or broadcast. DRX update indication 610 identifies, according to some examples not covered by the claims, a different DRX on duration, or a different DRX periodicity, or, according to the invention, a DRX delay. In these scenarios, the group of UEs 115 delay entering a DRX on mode until subframe 605-b (*e.g.,* Subframe n+1). Thus, UEs 1-4 and the group of UEs 115 DRX on durations may be distributed into different subframes, thereby achieving load balancing. A base station 105 may send a broadcast by using a single broadcast channel for all UEs, or by using a broadcast channels for each group of UEs. The grouping of UEs 115 may be high-layer configured, or implicitly derived (*e.g*., based on RNTI). Furthermore, the payload in the broadcast may include one or more bits.

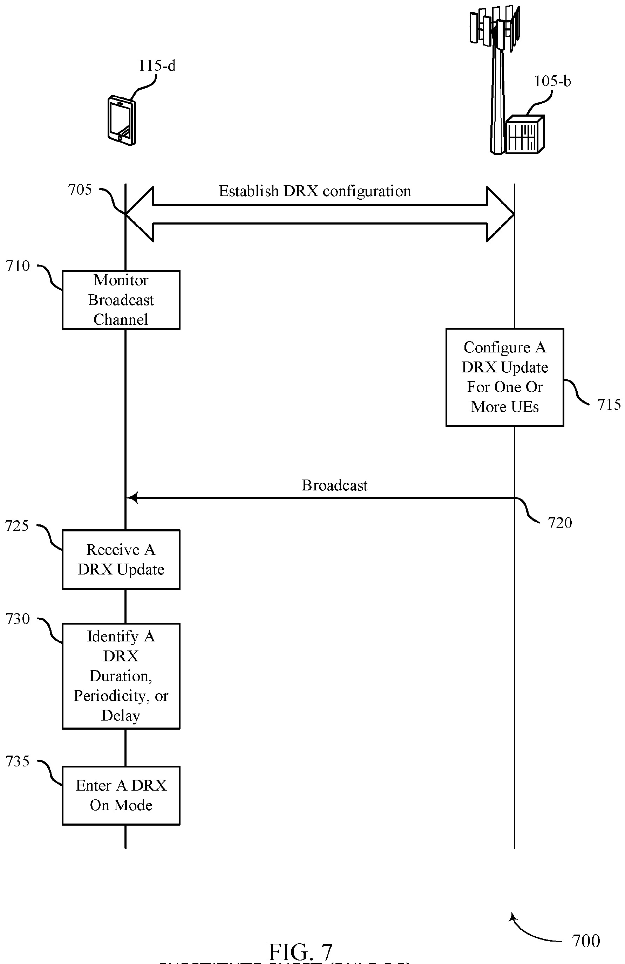

**FIG. 7** illustrates an example of a process flow 700 for sending a DRX update indication on a broadcast channel in accordance with one or more aspects of the present disclosure. Process flow 700 may include UE 115-d and base station 105-b, which may be examples of or which may represent aspects of techniques performed by a UE 115 or base station 105 as described with reference to FIGs. 1-6. Process flow 700 may include transmission of a broadcast channel, which includes a DRX update indication to update the duration of a DRX on mode, update the periodicity of a DRX on mode, or delay the entering of a DRX on mode.

Initially, the base station 105-b and the UE 115-d establish a DRX configuration at 705. The DRX configuration includes a first DRX on duration and a first DRX periodicity. The DRX configuration may also include a DTX configuration. At 710, the UE 115-d monitors broadcast channels, or a broadcast channel, for a DRX update indication. The UE may also monitor for a UE-specific grant, which may be an UL grant or a DL grant, based on the DRX configuration. If the UE-specific grant is received, the UE may enter a DRX on mode.

At 715, base station 105-b configures a DRX update for one or more UEs, consisting of a new DRX configuration (*e.g*., via DCI). Base station 105-b identifies a set of one or more UEs that are configured for a given DRX configuration, including a DRX duration and DRX periodicity. The base station 105-b identifies a new configuration based on the set of UEs. The base station 105-b may determine a control resource load condition. Base station 105-b may also identify a new DRX configuration based on the resource load condition. At 720, the base station 105-b transmits a DRX update indication on a broadcast channel. The DRX update indication is based on the new DRX configuration. The DRX update indication may also be based on the determined control resource load condition. The broadcast of 720 may include a group RNTI or a common search space. Additionally, the broadcast may include one or more bits for the DRX update indication. At 725, the UE 115-d receives a DRX update indication on the broadcast channel. Then, at 730, the UE 115-d identifies, according to some examples not covered by the claims, a second DRX on duration, or a second DRX periodicity, or, according to the invention, a DRX delay based at least in part on the DRX update indication. The one or more bits included in broadcast may indicate, according to some examples not covered by the claims, a duration between the first DRX on duration and the second DRX on duration, or, according to the invention, the DRX delay. In some cases, this duration between the first duration and the second duration may be a predefined duration. The UE 115-d may also identify a group, based on the RNTI or the common search space, and may monitor the broadcast channel based on the identified group. Then, at 735, the UE 115-d enters a DRX on mode based on the broadcast DRX update indication. The UE 115-d may alternatively enter a DRX off mode based on the received DRX update indication (e.g., based on a received UE-specific indication).

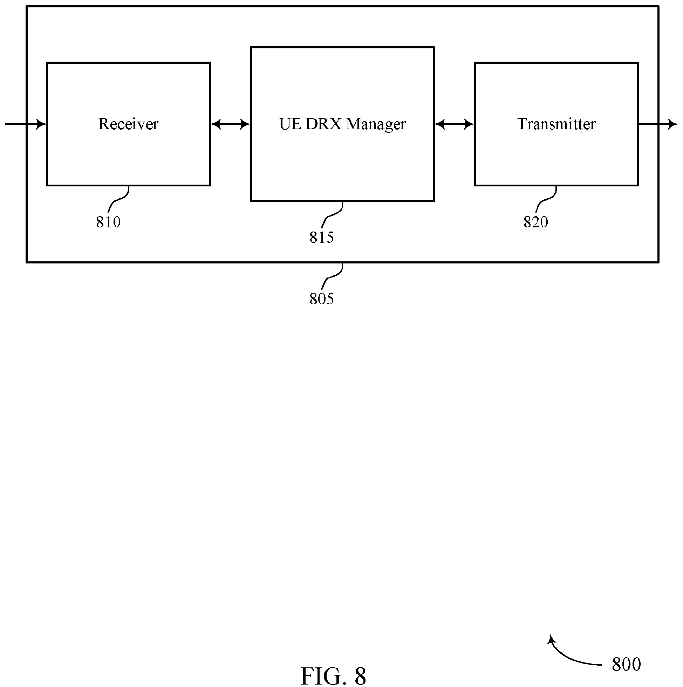

**FIG. 8** shows a block diagram 800 of a wireless device 805 that supports enhanced DRX management in wireless communication systems in accordance with one or more aspects of the present disclosure. Wireless device 805 may be an example of aspects of a UE 115 as described with reference to FIG. 1. Wireless device 805 may include receiver 810, UE DRX manager 815, and transmitter 820. Wireless device 805 may also include a processor. Each of these components may be in communication with one another (e.g., via one or more buses).

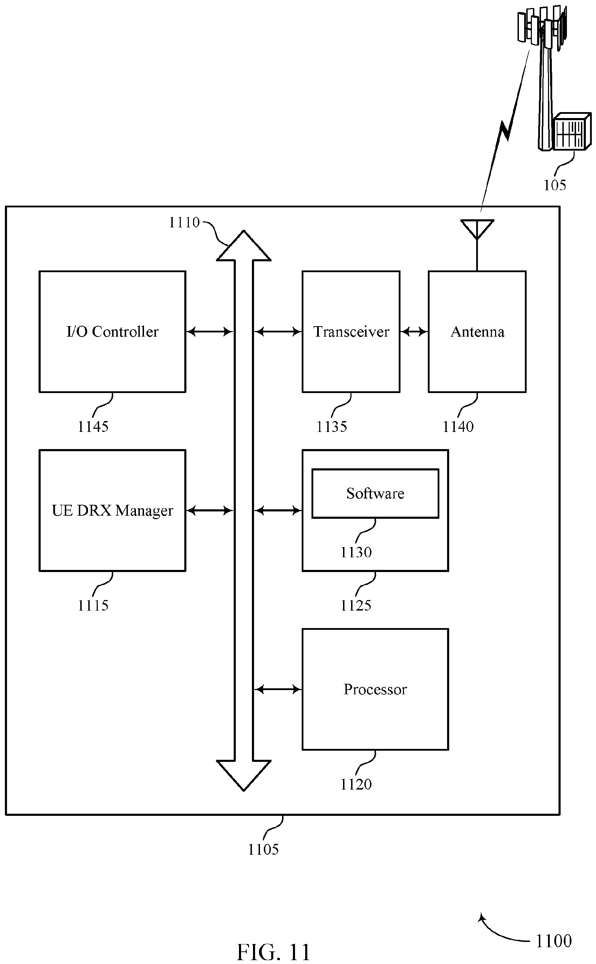

Receiver 810 may receive information such as packets, user data, or control information associated with various information channels (e.g., control channels, data channels, and information related to enhanced DRX management in NR, etc.). Information may be passed on to other components of the device. The receiver 810 may be an example of aspects of the transceiver 1135 described with reference to FIG. 11.

UE DRX manager 815 may be an example of aspects of the UE DRX manager 102 described with reference to FIG. 1 and aspects of the UE DRX manager 1115 described with reference to FIG. 11. UE DRX manager 815 establishes a DRX configuration including a first DRX on duration and a first DRX periodicity, receives a DRX update indication on a broadcast channel, identifies, according to some examples not covered by the clims, a second DRX on duration, or a second DRX periodicity, or, according to the invention, a DRX delay based on the DRX update indication, and enters a DRX on mode based on, according to some examples not covered by the claims, the second DRX on duration, or the second DRX periodicity, or, according to the invention, or the DRX delay.

Transmitter 820 may transmit signals generated by other components of the device. In some examples, the transmitter 820 may be collocated with a receiver 810 in a transceiver module. For example, the transmitter 820 may be an example of aspects of the transceiver 1135 described with reference to FIG. 11. The transmitter 820 may include a single antenna, or it may include a set of antennas.

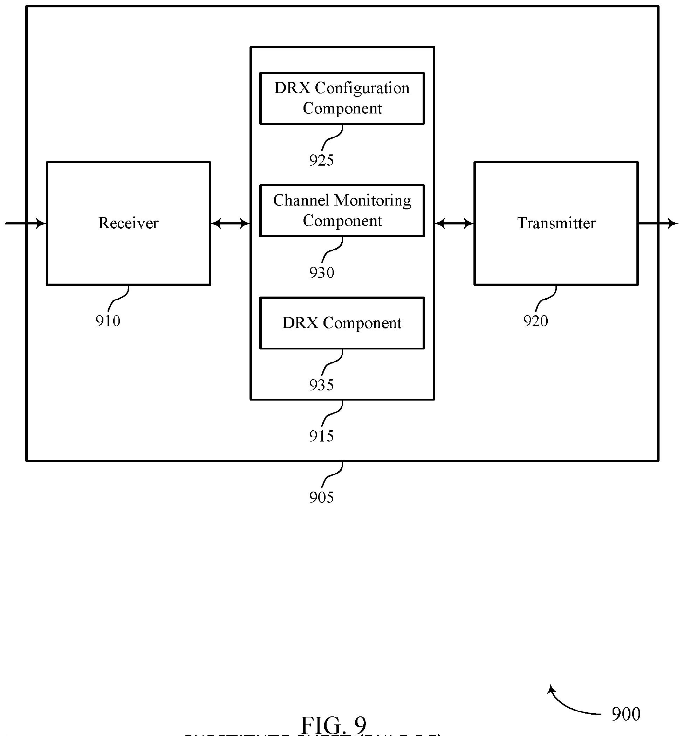

**FIG. 9** shows a block diagram 900 of a wireless device 905 that supports enhanced DRX management in wireless communication systems in accordance with one or more aspects of the present disclosure. Wireless device 905 may be an example of aspects of a wireless device 805 or a UE 115 as described with reference to FIGs. 1 and 8. Wireless device 905 may include receiver 910, UE DRX manager 915, and transmitter 920. Wireless device 905 may also include a processor. Each of these components may be in communication with one another *(e.g.,* via one or more buses).

Receiver 910 may receive information such as packets, user data, or control information associated with various information channels (e.g., control channels, data channels, and information related to enhanced DRX management in NR, etc.). Information may be passed on to other components of the device. The receiver 910 may be an example of aspects of the transceiver 1135 described with reference to FIG. 11.

UE DRX manager 915 may be an example of aspects of the UE DRX manager 1115 described with reference to FIG. 11. UE DRX manager 915 may also include DRX configuration component 925, channel monitoring component 930, and DRX component 935.

DRX configuration component 925 establishes a DRX configuration including a first DRX on duration and a first DRX periodicity and identifies, according to some examples not covered by the claims, a second DRX on duration, or a second DRX periodicity, or, according to the invention, a DRX delay based on the DRX update indication. In some cases, the duration between the first DRX on duration and the second DRX on duration is a predefined duration. In some cases, the DRX configuration includes a DTX configuration.

Channel monitoring component 930 receives a DRX update indication on a broadcast channel. In some cases, the broadcast channel includes a group RNTI or a common search space. In some cases, the broadcast channel includes one or more bits. In some cases, the one or more bits, according to an example not covered by the claims, a duration between the first DRX on duration and the second DRX on duration or, according to the invention, the DRX delay.

DRX component 935 enters a DRX on mode based on the second DRX on duration, the second DRX periodicity, or the DRX delay and enter a DRX off mode based on the received DRX update indication.

Transmitter 920 may transmit signals generated by other components of the device. In some examples, the transmitter 920 may be collocated with a receiver 910 in a transceiver module. For example, the transmitter 920 may be an example of aspects of the transceiver 1135 described with reference to FIG. 11. The transmitter 920 may include a single antenna, or it may include a set of antennas.

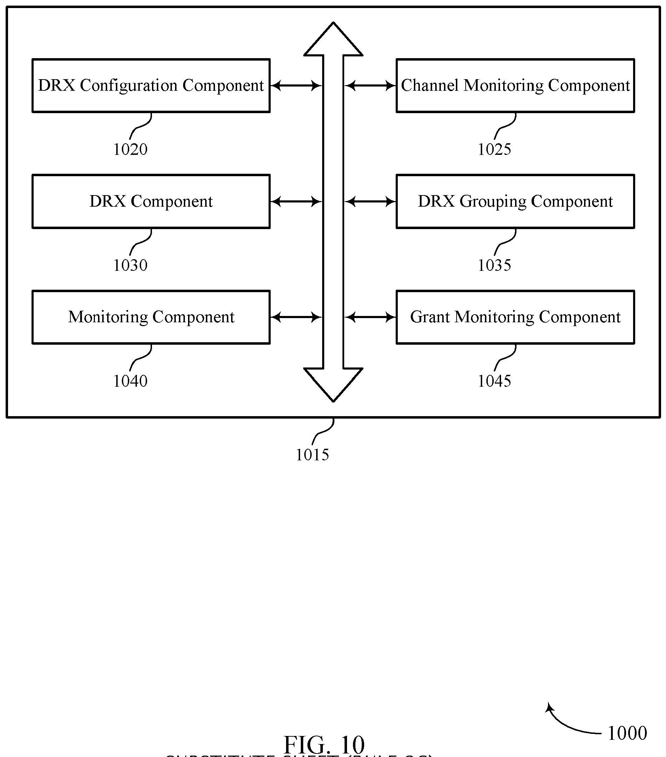

**FIG. 10** shows a block diagram 1000 of a UE DRX manager 1015 that supports enhanced DRX management in wireless communication systems in accordance with one or more aspects of the present disclosure. The UE DRX manager 1015 may be an example of aspects of a UE DRX manager 815, a UE DRX manager 915, or a UE DRX manager 1115 described with reference to FIGs. 8, 9, and 11. The UE DRX manager 1015 may include DRX configuration component 1020, channel monitoring component 1025, DRX component 1030, DRX grouping component 1035, monitoring component 1040, and grant monitoring component 1045. Each of these modules may communicate, directly or indirectly, with one another (e.g., via one or more buses).

DRX configuration component 1020 establishes a DRX configuration including a first DRX on duration and a first DRX periodicity and identifies, according to some examples not covered by the claims, a second DRX on duration, or a second DRX periodicity, or, according to the invention, a DRX delay based on the DRX update indication. In some cases, the duration between the first DRX on duration and the second DRX on duration is a predefined duration. In some cases, the DRX configuration includes a DTX configuration.

Channel monitoring component 1025 receives a DRX update indication on a broadcast channel. In some cases, the broadcast channel includes a group RNTI or a common search space. In some cases, the broadcast channel includes one or more bits. In some cases, the one or more bits indicate, according to an example not covered by the claims, a duration between the first DRX on duration and the second DRX on duration or, according to the invention, the DRX delay.

DRX component 1030 enters a DRX on mode based on, according to some examples not covered by the claims, the second DRX on duration, or the second DRX periodicity, or, according to the invention, the DRX delay and enter a DRX off mode based on the received DRX update indication.

DRX grouping component 1035 may identify a group, where the group is identified based on the group RNTI or the common search space. Monitoring component 1040 may monitor the broadcast channel based on the identified group.

Grant monitoring component 1045 may monitor for a UE-specific grant based on the DRX configuration, where the DRX on mode is entered based on the UE-specific grant. In some cases, the UE-specific grant is at least one of an UL grant and a DL grant.

**FIG. 11** shows a diagram of a system 1100 including a device 1105 that supports enhanced DRX management in wireless communication systems in accordance with one or more aspects of the present disclosure. Device 1105 may be an example of or include the components of wireless device 805, wireless device 905, or a UE 115 as described above, e.g., with reference to FIGs. 1, 8 and 9. Device 1105 may include components for bi-directional voice and data communications including components for transmitting and receiving communications, including UE DRX manager 1115, processor 1120, memory 1125, software 1130, transceiver 1135, antenna 1140, and I/O controller 1145. These components may be in electronic communication via one or more busses (e.g., bus 1110). Device 1105 may communicate wirelessly with one or more base stations 105.

Processor 1120 may include an intelligent hardware device, *(e.g.,* a general-purpose processor, a digital signal processor (DSP), a central processing unit (CPU), a microcontroller, an application-specific integrated circuit (ASIC), an field-programmable gate array (FPGA), a programmable logic device, a discrete gate or transistor logic component, a discrete hardware component, or any combination thereof). In some cases, processor 1120 may be configured to operate a memory array using a memory controller. In other cases, a memory controller may be integrated into processor 1120. Processor 1120 may be configured to execute computer-readable instructions stored in a memory to perform various functions (e.g., functions or tasks supporting enhanced DRX management in NR).

Memory 1125 may include random access memory (RAM) and read only memory (ROM). The memory 1125 may store computer-readable, computer-executable software 1130 including instructions that, when executed, cause the processor to perform various functions described herein. In some cases, the memory 1125 may contain, among other things, a basic input/output system (BIOS) which may control basic hardware and/or software operation such as the interaction with peripheral components or devices.

Software 1130 may include code to implement aspects of the present disclosure, including code to support enhanced DRX management in NR. Software 1130 may be stored in a non-transitory computer-readable medium such as system memory or other memory. In some cases, the software 1130 may not be directly executable by the processor but may cause a computer (e.g., when compiled and executed) to perform functions described herein.

Transceiver 1135 may communicate bi-directionally, via one or more antennas, wired, or wireless links as described above. For example, the transceiver 1135 may represent a wireless transceiver and may communicate bi-directionally with another wireless transceiver. The transceiver 1135 may also include a modem to modulate the packets and provide the modulated packets to the antennas for transmission, and to demodulate packets received from the antennas.

In some cases, the wireless device may include a single antenna 1140. However, in some cases the device may have more than one antenna 1140, which may be capable of concurrently transmitting or receiving multiple wireless transmissions.

I/O controller 1145 may manage input and output signals for device 1105. I/O controller 1145 may also manage peripherals not integrated into device 1105. In some cases, I/O controller 1145 may represent a physical connection or port to an external peripheral. In some cases, I/O controller 1145 may utilize an operating system such as iOS^{®}, ANDROID^{®}, MS-DOS^{®}, MS-WINDOWS^{®}, OS/2^{®}, UNIX^{®}, LINUX^{®}, or another known operating system.

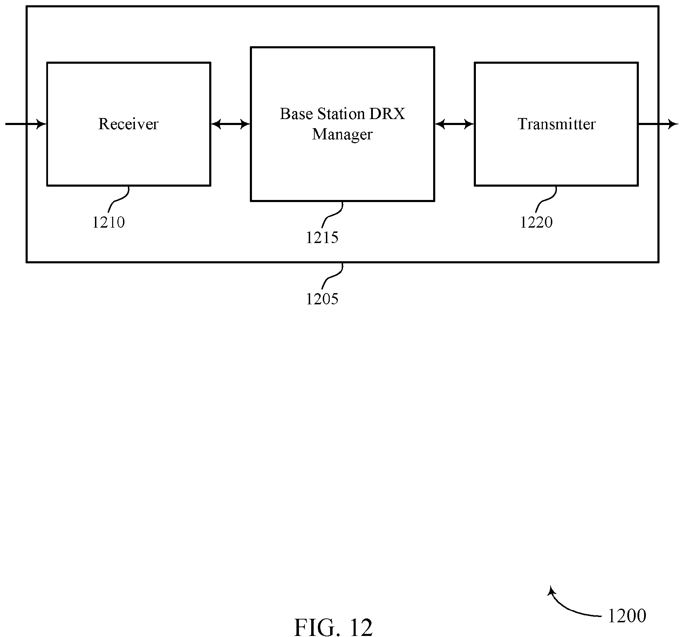

**FIG. 12** shows a block diagram 1200 of a wireless device 1205 that supports enhanced DRX management in wireless communication systems in accordance with one or more aspects of the present disclosure. Wireless device 1205 may be an example of aspects of a base station 105 as described with reference to FIG. 1. Wireless device 1205 may include receiver 1210, base station DRX manager 1215, and transmitter 1220. Wireless device 1205 may also include a processor. Each of these components may be in communication with one another (*e.g*., via one or more buses).

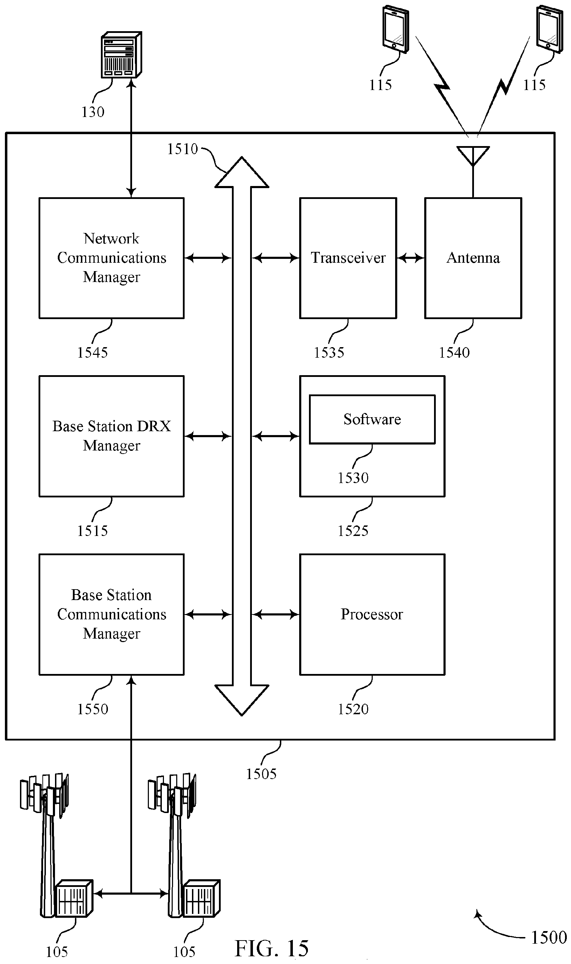

Receiver 1210 may receive information such as packets, user data, or control information associated with various information channels (e.g., control channels, data channels, and information related to enhanced DRX management in NR, etc.). Information may be passed on to other components of the device. The receiver 1210 may be an example of aspects of the transceiver 1535 described with reference to FIG. 15.

Base station DRX manager 1215 may be an example of aspects of the network DRX manager 101 described with reference to FIG. 1 and aspects of the base station DRX manager 1515 described with reference to FIG. 15. Base station DRX manager 1215 identifies a set of one or more UEs that are configured for a DRX configuration, identifies a DRX on duration, a DRX periodicity, or a DRX delay based on the set of one or more UEs, and transmits a DRX update indication on a broadcast channel based on the DRX on duration, the DRX periodicity, or the DRX delay. In the present invention, the DRX update indication comprises a UE-specific indication whether a DRX on period is delayed in addition to a delay duration.

Transmitter 1220 may transmit signals generated by other components of the device. In some examples, the transmitter 1220 may be collocated with a receiver 1210 in a transceiver module. For example, the transmitter 1220 may be an example of aspects of the transceiver 1535 described with reference to FIG. 15. The transmitter 1220 may include a single antenna, or it may include a set of antennas.

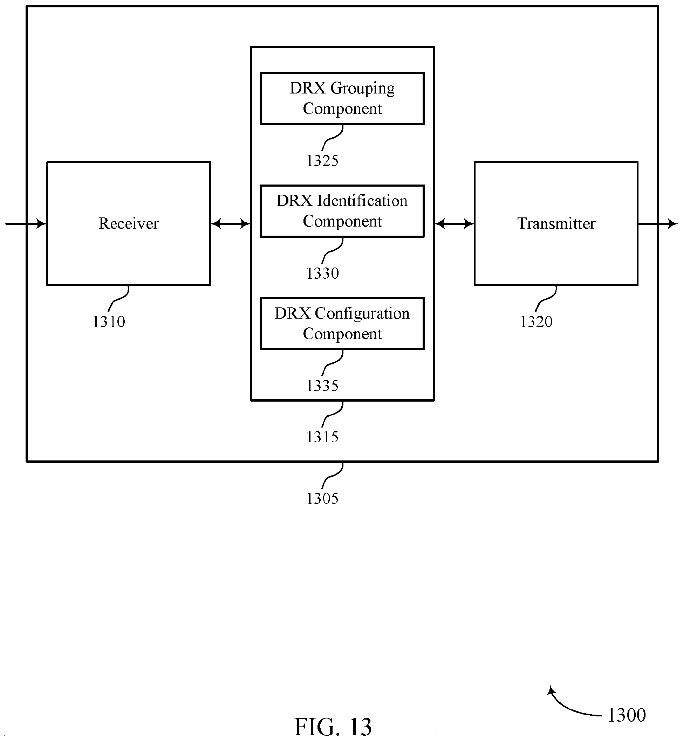

**FIG. 13** shows a block diagram 1300 of a wireless device 1305 that supports enhanced DRX management in wireless communication systems in accordance with one or more aspects of the present disclosure. Wireless device 1305 may be an example of aspects of a wireless device 1205 or a base station 105 as described with reference to FIGs. 1 and 12. Wireless device 1305 may include receiver 1310, base station DRX manager 1315, and transmitter 1320. Wireless device 1305 may also include a processor. Each of these components may be in communication with one another (e.g., via one or more buses).

Receiver 1310 may receive information such as packets, user data, or control information associated with various information channels (e.g., control channels, data channels, and information related to enhanced DRX management in NR, etc.). Information may be passed on to other components of the device. The receiver 1310 may be an example of aspects of the transceiver 1535 described with reference to FIG. 15.

Base station DRX manager 1315 may be an example of aspects of the base station DRX manager 1515 described with reference to FIG. 15. Base station DRX manager 1315 may also include DRX grouping component 1325, DRX identification component 1330, and DRX configuration component 1335.

DRX grouping component 1325 identifies a set of one or more UEs that are configured for a DRX configuration and transmit a UE group indication, where the DRX on duration, the DRX periodicity, or the DRX delay is based on the UE group indication. In some cases, the DRX configuration includes a DTX configuration. DRX identification component 1330 identifies a DRX on duration, a DRX periodicity, or a DRX delay based on the set of one or more UEs.

DRX configuration component 1335 transmits a DRX update indication on a broadcast channel based on the DRX on duration, the DRX periodicity, or the DRX delay. In the present invention, the DRX update indication comprises a UE-specific indication whether a DRX on period is delayed in addition to a delay duration. In some cases, the broadcast channel includes a group RNTI or a common search space. In some cases, the DRX update indication includes an indication to enter a DRX off mode. In some cases, the broadcast channel includes one or more bits. In some cases, the one or more bits indicate, according to an example not covered by the claims, a duration between the DRX on duration and an additional second DRX on duration or, according to the invention, the DRX delay. In some cases, the duration between the DRX on duration and the additional DRX on duration is a predefined duration.

Transmitter 1320 may transmit signals generated by other components of the device. In some examples, the transmitter 1320 may be collocated with a receiver 1310 in a transceiver module. For example, the transmitter 1320 may be an example of aspects of the transceiver 1535 described with reference to FIG. 15. The transmitter 1320 may include a single antenna, or it may include a set of antennas.

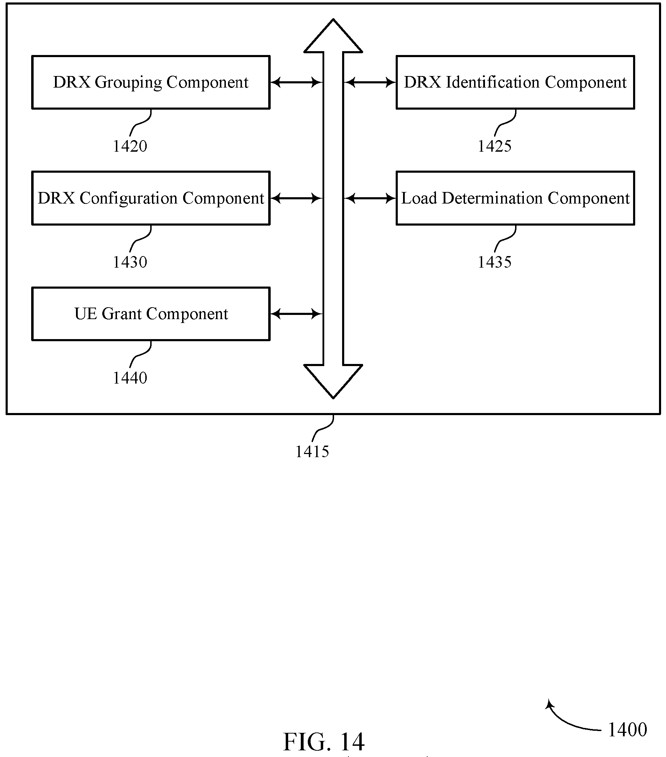

**FIG. 14** shows a block diagram 1400 of a base station DRX manager 1415 that supports enhanced DRX management in wireless communication systems in accordance with one or more aspects of the present disclosure. The base station DRX manager 1415 may be an example of aspects of a base station DRX manager 1515 described with reference to FIGs. 12, 13, and 15. The base station DRX manager 1415 may include DRX grouping component 1420, DRX identification component 1425, DRX configuration component 1430, load determination component 1435, and UE grant component 1440. Each of these modules may communicate, directly or indirectly, with one another (e.g., via one or more buses).

DRX grouping component 1420 identifies a set of one or more UEs that are configured for a DRX configuration and transmits a UE group indication, where the DRX on duration, the DRX periodicity, or the DRX delay is based on the UE group indication. In some cases, the DRX configuration includes a DTX configuration. DRX identification component 1425 may identify a DRX on duration, a DRX periodicity, or a DRX delay based on the set of one or more UEs.

DRX configuration component 1430 transmits a DRX update indication on a broadcast channel based on the DRX on duration, the DRX periodicity, or the DRX delay. In the present invention, the DRX update indication comprises a UE-specific indication whether a DRX on period is delayed in addition to a delay duration. In some cases, the broadcast channel includes a group RNTI or a common search space. In some cases, the DRX update indication includes an indication to enter a DRX off mode. In some cases, the broadcast channel includes one or more bits. In some cases, the one or more bits indicate, according to an example not covered by the claims, a duration between the DRX on duration and an additional second DRX on duration or, according to the invention, the DRX delay. In some cases, the duration between the DRX on duration and the additional DRX on duration is a predefined duration.

Load determination component 1435 may determine a control resource load condition, where the DRX update indication is transmitted based on the control resource load condition. UE grant component 1440 may transmit a UE-specific grant based on the DRX configuration of the set of one or more UEs. In some cases, the UE-specific grant is at least one of an UL grant and a DL grant.

**FIG. 15** shows a diagram of a system 1500 including a device 1505 that supports enhanced DRX management in wireless communication systems in accordance with one or more aspects of the present disclosure. Device 1505 may be an example of or include the components of base station 105 as described above, e.g., with reference to FIG. 1. Device 1505 may include components for bi-directional voice and data communications including components for transmitting and receiving communications, including base station DRX manager 1515, processor 1520, memory 1525, software 1530, transceiver 1535, antenna 1540, network communications manager 1545, and base station communications manager 1550. These components may be in electronic communication via one or more busses (e.g., bus 1510). Device 1505 may communicate wirelessly with one or more UEs 115.

Processor 1520 may include an intelligent hardware device, *(e.g.,* a general-purpose processor, a DSP, a CPU, a microcontroller, an ASIC, an FPGA, a programmable logic device, a discrete gate or transistor logic component, a discrete hardware component, or any combination thereof). In some cases, processor 1520 may be configured to operate a memory array using a memory controller. In other cases, a memory controller may be integrated into processor 1520. Processor 1520 may be configured to execute computer-readable instructions stored in a memory to perform various functions (e.g., functions or tasks supporting enhanced DRX management in NR).

Memory 1525 may include RAM and ROM. The memory 1525 may store computer-readable, computer-executable software 1530 including instructions that, when executed, cause the processor to perform various functions described herein. In some cases, the memory 1525 may contain, among other things, a BIOS which may control basic hardware and/or software operation such as the interaction with peripheral components or devices.

Software 1530 may include code to implement aspects of the present disclosure, including code to support enhanced DRX management in NR. Software 1530 may be stored in a non-transitory computer-readable medium such as system memory or other memory. In some cases, the software 1530 may not be directly executable by the processor but may cause a computer (e.g., when compiled and executed) to perform functions described herein.

Transceiver 1535 may communicate bi-directionally, via one or more antennas, wired, or wireless links as described above. For example, the transceiver 1535 may represent a wireless transceiver and may communicate bi-directionally with another wireless transceiver. The transceiver 1535 may also include a modem to modulate the packets and provide the modulated packets to the antennas for transmission, and to demodulate packets received from the antennas.

In some cases, the wireless device may include a single antenna 1540. However, in some cases the device may have more than one antenna 1540, which may be capable of concurrently transmitting or receiving multiple wireless transmissions.

Network communications manager 1545 may manage communications with the core network (e.g., via one or more wired backhaul links). For example, the network communications manager 1545 may manage the transfer of data communications for client devices, such as one or more UEs 115.

Base station communications manager 1550 may manage communications with other base station 105, and may include a controller or scheduler for controlling communications with UEs 115 in cooperation with other base stations 105. For example, the base station communications manager 1550 may coordinate scheduling for transmissions to UEs 115 for various interference mitigation techniques such as beamforming or joint transmission. In some examples, base station communications manager 1550 may provide an X2 interface within an LTE/ LTE-Advanced (LTE-A) wireless communication network technology to provide communication between base stations 105.

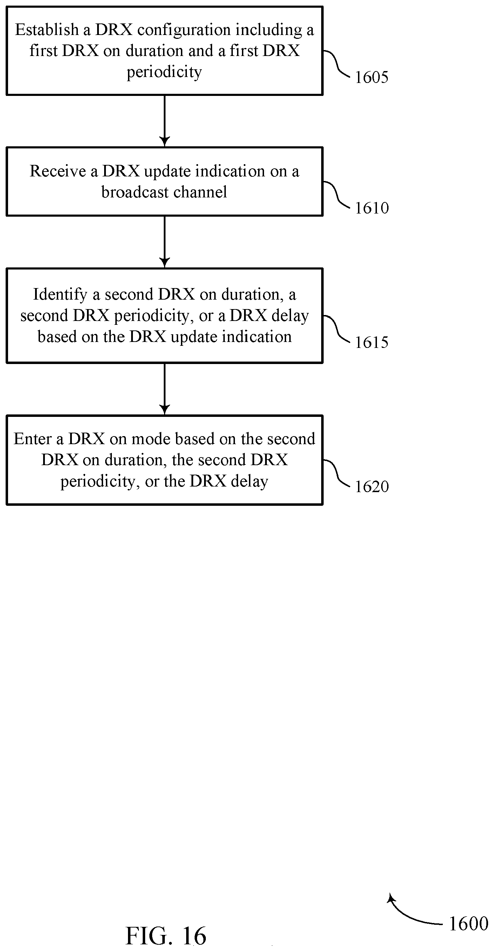

**FIG. 16** shows a flowchart illustrating a method 1600 for enhanced DRX management in wireless communication systems in accordance with one or more aspects of the present disclosure. The operations of method 1600 may be implemented by a UE 115 or its components as described herein. For example, the operations of method 1600 may be performed by a UE DRX manager as described with reference to FIGs. 8 through 11. In some examples, a UE 115 may execute a set of codes to control the functional elements of the device to perform the functions described below. Additionally or alternatively, the UE 115 may perform aspects the functions described below using special-purpose hardware.

At 1605 the UE 115 establishes a DRX configuration comprising a first DRX on duration and a first DRX periodicity. The operations of 1605 are performed according to the methods described with reference to FIGs. 1 through 7. In certain examples, aspects of the operations of 1605 are performed by a DRX configuration component as described with reference to FIGs. 8 through 11.

At 1610 the UE 115 receives a DRX update indication on a broadcast channel. The operations of 1610 are performed according to the methods described with reference to FIGs. 1 through 7. In certain examples, aspects of the operations of 1610 are performed by a channel monitoring component as described with reference to FIGs. 8 through 11.

At 1615 the UE 115 identifies, according to some examples not covered by the claims, a second DRX on duration, or a second DRX periodicity, or, according to the invention, a DRX delay based at least in part on the DRX update indication. The operations of 1615 are performed according to the methods described with reference to FIGs. 1 through 7. In certain examples, aspects of the operations of 1615 are performed by a DRX configuration component as described with reference to FIGs. 8 through 11.

At 1620 the UE 115 enters a DRX on mode based at least in part on, according to some examples not covered by the claims, the second DRX on duration, or the second DRX periodicity, or, according to the invention, the DRX delay. The operations of 1620 are performed according to the methods described with reference to FIGs. 1 through 7. In certain examples, aspects of the operations of 1620 are performed by a DRX component as described with reference to FIGs. 8 through 11.

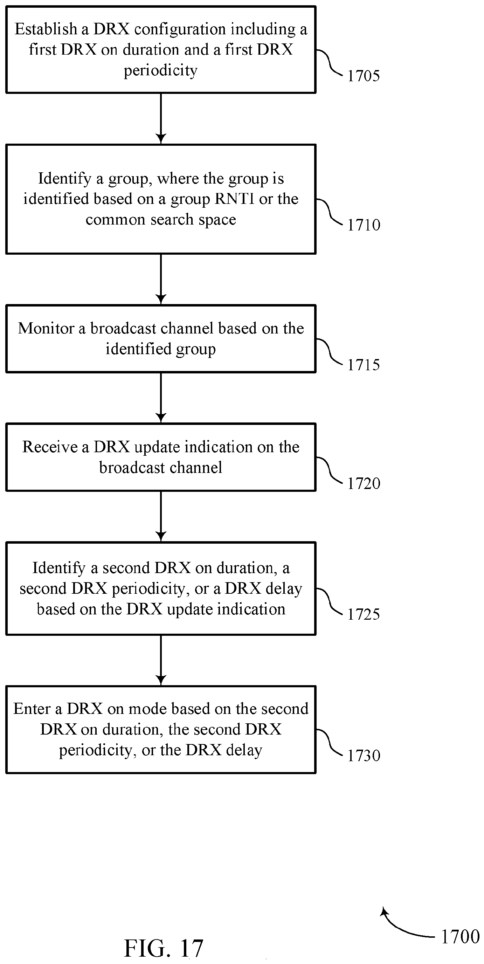

**FIG. 17** shows a flowchart illustrating a method 1700 for enhanced DRX management in wireless communication systems in accordance with one or more aspects of the present disclosure. The operations of method 1700 may be implemented by a UE 115 or its components as described herein. For example, the operations of method 1700 may be performed by a UE DRX manager as described with reference to FIGs. 8 through 11. In some examples, a UE 115 may execute a set of codes to control the functional elements of the device to perform the functions described below. Additionally or alternatively, the UE 115 may perform aspects the functions described below using special-purpose hardware.

At 1705 the UE 115 establishes a DRX configuration comprising a first DRX on duration and a first DRX periodicity. The operations of 1705 may be performed according to the methods described with reference to FIGs. 1 through 7. In certain examples, aspects of the operations of 1705 may be performed by a DRX configuration component as described with reference to FIGs. 8 through 11.

At 1710 the UE 115 may identify a group, wherein the group is identified based at least in part on a group RNTI or the common search space. The operations of 1710 may be performed according to the methods described with reference to FIGs. 1 through 7. In certain examples, aspects of the operations of 1710 may be performed by a DRX grouping component as described with reference to FIGs. 8 through 11.

At 1715 the UE 115 monitors a broadcast channel based at least in part on the identified group. The operations of 1715 may be performed according to the methods described with reference to FIGs. 1 through 7. In certain examples, aspects of the operations of 1715 may be performed by a monitoring component as described with reference to FIGs. 8 through 11.

At 1720 the UE 115 receives a DRX update indication on the broadcast channel. The operations of 1720 may be performed according to the methods described with reference to FIGs. 1 through 7. In certain examples, aspects of the operations of 1720 may be performed by a channel monitoring component as described with reference to FIGs. 8 through 11.

At 1725 the UE 115 identifies, according to some examples not covered by the claims, a second DRX on duration, or a second DRX periodicity, or, according to the invention, a DRX delay based at least in part on the DRX update indication. The operations of 1725 may be performed according to the methods described with reference to FIGs. 1 through 7. In certain examples, aspects of the operations of 1725 may be performed by a DRX configuration component as described with reference to FIGs. 8 through 11.

At 1730 the UE 115 enters a DRX on mode based at least in part on, according to some examples not covered by the claims, the second DRX on duration, or the second DRX periodicity, or, according to the invention, the DRX delay. The operations of 1730 may be performed according to the methods described with reference to FIGs. 1 through 7. In certain examples, aspects of the operations of 1730 may be performed by a DRX component as described with reference to FIGs. 8 through 11. In some cases, the broadcast channel includes a group RNTI or a common search space.

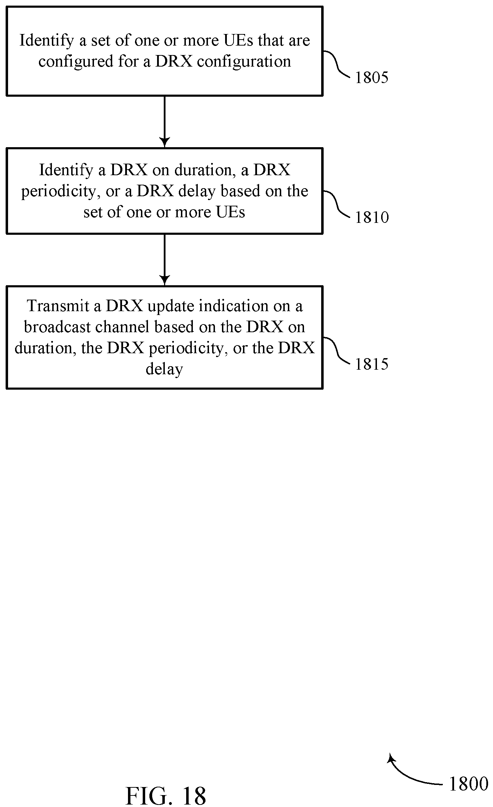

**FIG. 18** shows a flowchart illustrating a method 1800 for enhanced DRX management in wireless communication systems in accordance with one or more aspects of the present disclosure. The operations of method 1800 are implemented by a base station 105 or its components as described herein. For example, the operations of method 1800 are
performed by a base station DRX manager as described with reference to FIGs. 12 through 15. In some examples, a base station 105 executes a set of codes to control the functional elements of the device to perform the functions described below. Additionally or alternatively, the base station 105 performs aspects the functions described below using special-purpose hardware.

At 1805 the base station 105 identifies a set of one or more UEs that are configured for a DRX configuration. The operations of 1805 are performed according to the methods described with reference to FIGs. 1 through 7. In certain examples, aspects of the operations of 1805 are performed by a DRX grouping component as described with reference to FIGs. 12 through 15.

At 1810 the base station 105 identifies a DRX on duration, a DRX periodicity, or a DRX delay based at least in part on the set of one or more UEs. The operations of 1810 are performed according to the methods described with reference to FIGs. 1 through 7. In certain examples, aspects of the operations of 1810 are performed by a DRX identification component as described with reference to FIGs. 12 through 15.

At 1815 the base station 105 transmits a DRX update indication on a broadcast channel based at least in part on the DRX on duration, the DRX periodicity, or the DRX delay. In the present invention, the DRX update indication comprises a UE-specific indication whether a DRX on period is delayed in addition to a delay duration. The operations of 1815 are performed according to the methods described with reference to FIGs. 1 through 7. In certain examples, aspects of the operations of 1815 are performed by a DRX configuration component as described with reference to FIGs. 12 through 15.

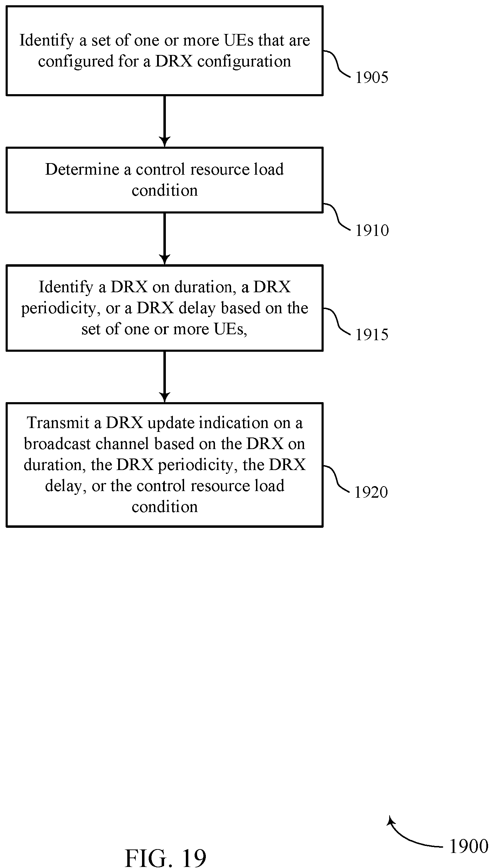

**FIG. 19** shows a flowchart illustrating a method 1900 for enhanced DRX management in wireless communication systems in accordance with one or more aspects of the present disclosure. The operations of method 1900 may be implemented by a base station 105 or its components as described herein. For example, the operations of method 1900 may be performed by a base station DRX manager as described with reference to FIGs. 12 through 15. In some examples, a base station 105 may execute a set of codes to control the functional elements of the device to perform the functions described below. Additionally or alternatively, the base station 105 may perform aspects the functions described below using special-purpose hardware.

At 1905 the base station 105 identifies a set of one or more UEs that are configured for a DRX configuration. The operations of 1905 may be performed according to the methods described with reference to FIGs. 1 through 7. In certain examples, aspects of the operations of 1905 may be performed by a DRX grouping component as described with reference to FIGs. 12 through 15.

At 1910 the base station 105 may determine a control resource load condition. The operations of 1910 may be performed according to the methods described with reference to FIGs. 1 through 7. In certain examples, aspects of the operations of 1910 may be performed by a load determination component as described with reference to FIGs. 12 through 15.

At 1915 the base station 105 identifies a DRX on duration, a DRX periodicity, or a DRX delay based at least in part on the set of one or more UEs. The operations of 1915 may be performed according to the methods described with reference to FIGs. 1 through 7. In certain examples, aspects of the operations of 1915 may be performed by a DRX identification component as described with reference to FIGs. 12 through 15.

At 1920 the base station 105 transmits a DRX update indication on a broadcast channel based at least in part on the DRX on duration, the DRX periodicity, the DRX delay, and/or the control resource load condition. In the present invention, the DRX update indication comprises a UE-specific indication whether a DRX on period is delayed in addition to a delay duration. The operations of 1920 may be performed according to the methods described with reference to FIGs. 1 through 7. In certain examples, aspects of the operations of 1920 may be performed by a DRX configuration component as described with reference to FIGs. 12 through 15.

It should be noted that the methods described above describe possible implementations, and that the operations and the operations may be rearranged or otherwise modified and that other implementations are possible. Furthermore, aspects from two or more of the methods may be combined.

Techniques described herein may be used for various wireless communications systems such as CDMA, TDMA, FDMA, OFDMA, single carrier frequency division multiple access (SC-FDMA), and other systems. The terms "system" and "network" are often used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications system (UMTS). 3GPP LTE and LTE-A are releases of UMTS that use E-UTRA. UTRA, E-UTRA, UMTS, LTE, LTE-A, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. While aspects an LTE system may be described for purposes of example, and LTE terminology may be used in much of the description, the techniques described herein are applicable beyond LTE applications.

In LTE/LTE-A networks, including such networks described herein, the term evolved node B (eNB) may be generally used to describe the base stations. The wireless communications system or systems described herein may include a heterogeneous LTE/LTE-A network in which different types of eNBs provide coverage for various geographical regions. For example, each eNB or base station may provide communication coverage for a macro cell, a small cell, or other types of cell. The term "cell" may be used to describe a base station, a carrier or component carrier associated with a base station, or a coverage area *(e.g.,* sector, etc.) of a carrier or base station, depending on context.

Base stations may include or may be referred to by those skilled in the art as a base transceiver station, a radio base station, an access point, a radio transceiver, a NodeB, eNB, Home NodeB, a Home eNodeB, or some other suitable terminology. The geographic coverage area for a base station may be divided into sectors making up only a portion of the coverage area. The wireless communications system or systems described herein may include base stations of different types *(e.g.,* macro or small cell base stations). The UEs described herein may be able to communicate with various types of base stations and network equipment including macro eNBs, small cell eNBs, relay base stations, and the like. There may be overlapping geographic coverage areas for different technologies.

A macro cell generally covers a relatively large geographic area (e.g., several kilometers in radius) and may allow unrestricted access by UEs with service subscriptions with the network provider. A small cell is a lower-powered base station, as compared with a macro cell, that may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area *(e.g.,* a home) and may provide restricted access by UEs having an association with the femto cell *(e.g.,* UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple *(e.g.,* two, three, four, and the like) cells *(e.g.,* component carriers). A UE may be able to communicate with various types of base stations and network equipment including macro eNBs, small cell eNBs, relay base stations, and the like.

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The DL transmissions described herein may also be called forward link transmissions while the UL transmissions may also be called reverse link transmissions. Each communication link described herein—including, for example, wireless communications system 100 and 200 of FIGs. 1 and 2—may include one or more carriers, where each carrier may be a signal made up of multiple sub-carriers (e.g., waveform signals of different frequencies).

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices *(e.g.,* a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of' or "one or more of') indicates an inclusive list such that, for example, a list of at least one of A, B, or C means A or B or C or AB or AC or BC or ABC (*i.e.,* A and B and C). Also, as used herein, the phrase "based on" shall not be construed as a reference to a closed set of conditions. For example, an exemplary operation that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, digital subscriber line (DSL), or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A method (1600) for wireless communication at a user equipment, UE, (115) comprising:
establishing (1605) a discontinuous reception, DRX, configuration comprising a first DRX on duration and a first DRX periodicity;
receiving (1610) a DRX update indication on a broadcast channel, wherein the DRX update indication comprises a UE-specific indication whether a DRX on period is delayed in addition to a delay duration;
identifying (1615) a DRX delay based at least in part on the DRX update indication; and
entering (1620) a DRX on mode based at least in part on the DRX delay.

2. The method of claim 1, wherein
the broadcast channel includes a group radio network temporary identifier, RNTI, or a common search space.

3. The method of claim 2, further comprising:
identifying a DRX timing group, wherein the DRX timing group comprises a plurality of user equipments, UEs, and is identified based at least in part on the group radio network temporary identifier, RNTI, or the common search space; and
monitoring the broadcast channel based at least in part on the identified DRX timing group.

4. The method of claim 1, further comprising:
entering a DRX off mode based at least in part on the received DRX update indication.

5. The method of claim 1, wherein
the broadcast channel includes one or more bits.

6. The method of claim 5, wherein
the one or more bits indicate the DRX delay.

7. The method of claim 1, further comprising:
monitoring for a user equipment, UE-, specific grant based at least in part on the DRX configuration, wherein the DRX on mode is entered based at least in part on the UE-specific grant.

8. The method of claim 7, wherein
the UE-specific grant is at least one of an uplink grant and a downlink grant.

9. The method of claim 1, wherein
the DRX configuration comprises a discontinuous transmission, DTX, configuration.

10. A method (1800) for wireless communication at a base station (105), comprising:
identifying (1805) a set of one or more user equipment, UEs, (115) that are configured for a discontinuous reception, DRX, configuration;
identifying (1810) a DRX on duration, a DRX periodicity, or a DRX delay based at least in part on the set of one or more UEs; and
transmitting (1815) a DRX update indication on a broadcast channel based at least in part on the DRX on duration, the DRX periodicity, or the DRX delay, wherein the DRX update indication comprises a UE-specific indication whether a DRX on period is delayed in addition to a delay duration.

11. The method of claim 10, further comprising:
determining a control resource load condition, wherein the DRX update indication is transmitted based at least in part on the control resource load condition.

12. An apparatus for wireless communication at a user equipment, UE, (115) comprising:
means for establishing a discontinuous reception, DRX, configuration comprising a first DRX on duration and a first DRX periodicity;
means for receiving a DRX update indication a broadcast channel, wherein the DRX update indication comprises a UE-specific indication whether a DRX on period is delayed in addition to a delay duration;
means for identifying a DRX delay based at least in part on the DRX update indication; and
means for entering a DRX on mode based at least in part on the DRX delay.

13. An apparatus for wireless communication at a base station (105), comprising:
means for identifying a set of one or more user equipment, UEs, (115) that are configured for a discontinuous reception, DRX, configuration;
means for identifying a DRX on duration, a DRX periodicity, or a DRX delay based at least in part on the set of one or more UEs; and
means for transmitting a DRX update indication on a broadcast channel based at least in part on the DRX on duration, the DRX periodicity, or the DRX delay, wherein the DRX update indication comprises a UE-specific indication whether a DRX on period is delayed in addition to a delay duration.

14. A computer program comprising instructions for carrying out a method according to any of claims 1 to 11 when executed on at least one processor.

## Patentansprüche

1. Ein Verfahren (1600) für drahtlose Kommunikation an einem Benutzerendgerät, UE, (115), das Folgendes umfasst:
Einrichten (1605) einer Konfiguration für diskontinuierlichen Empfang, DRX, mit einer ersten DRX-Einschaltdauer und einer ersten DRX-Periodizität;
Empfangen (1610) einer DRX-Aktualisierungsanzeige auf einem Rundfunkkanal, wobei die DRX-Aktualisierungsanzeige eine UE-spezifische Anzeige umfasst, ob eine DRX- Einschaltperiode zusätzlich zu einer Verzögerungsdauer verzögert ist;
Identifizieren (1615) einer DRX-Verzögerung zumindest teilweise auf der Grundlage der DRX-Aktualisierungsanzeige; und
Eintreten (1620) in einen DRX-Ein-Modus zumindest teilweise auf der Grundlage der DRX-Verzögerung.

2. Das Verfahren nach Anspruch 1, wobei
der Sendekanal eine temporäre Gruppennetzkennung, RNTI, oder einen gemeinsamen Suchraum enthält.

3. Das Verfahren nach Anspruch 2, ferner umfassend:
Identifizieren einer DRX-Zeitsteuerungsgruppe, wobei die DRX-Zeitsteuerungsgruppe eine Vielzahl von Benutzerendgeräten, UEs, umfasst und zumindest teilweise auf der Grundlage der temporären Gruppennetzkennung, RNTI, oder des gemeinsamen Suchraums identifiziert wird; und
Überwachen des Rundfunkkanals zumindest teilweise auf der Grundlage der identifizierten DRX-Zeitsteuerungsgruppe.

4. Das Verfahren nach Anspruch 1, ferner umfassend:
Eintreten in einen DRX-Aus-Modus zumindest teilweise auf der Grundlage der empfangenen DRX-Aktualisierungsanzeige.

5. Das Verfahren nach Anspruch 1, wobei
der Sendekanal ein oder mehrere Bits enthält.

6. Das Verfahren nach Anspruch 5, wobei
das eine oder die mehreren Bits die DRX-Verzögerung anzeigen.

7. Das Verfahren nach Anspruch 1, ferner umfassend:
Überwachen auf eine UE-spezifische Erlaubnis, die zumindest teilweise auf der DRX-Konfiguration basiert, wobei der DRX-Ein-Modus zumindest teilweise auf der UE-spezifischen Erlaubnis beruht.

8. Das Verfahren nach Anspruch 7, wobei
die UE-spezifische Erlaubnis mindestens eine von einer Aufwärtsstrecken-Erlaubnis und einer Abwärtsstrecken-Erlaubnis ist.

9. Das Verfahren nach Anspruch 1, wobei
die DRX-Konfiguration eine diskontinuierliche Übertragungskonfiguration, DTX, umfasst.

10. Ein Verfahren (1800) für drahtlose Kommunikation an einer Basisstation (105), das Folgendes umfasst:
Identifizieren (1805) eines Satzes von einem oder mehreren Benutzerendgeräten, UEs, (115), die für eine diskontinuierliche Empfangskonfiguration, DRX, konfiguriert sind;
Identifizieren (1810) einer DRX-Einschaltdauer, einer DRX-Periodizität oder einer DRX-Verzögerung zumindest teilweise auf der Grundlage des Satzes von einem oder mehreren UEs; und
Übertragen (1815) einer DRX-Aktualisierungsanzeige auf einem Rundfunkkanal, die zumindest teilweise auf der DRX-Einschaltdauer, der DRX-Periodizität oder der DRX-Verzögerung basiert, wobei die DRX-Aktualisierungsanzeige eine UE-spezifische Anzeige umfasst, ob eine DRX-Einschaltperiode zusätzlich zu einer Verzögerungsdauer verzögert ist.

11. Das Verfahren nach Anspruch 10, ferner umfassend:
Bestimmen eines Kontrollressourcen-Lastzustands, wobei die DRX-Aktualisierungsanzeige zumindest teilweise auf der Grundlage des Kontrollressourcen-Lastzustands übertragen wird.

12. Eine Vorrichtung zur drahtlosen Kommunikation an einem Benutzerendgerät, UE, (115), umfassend:
Mittel zum Einrichten einer diskontinuierlichen Empfangs-, DRX-, Konfiguration, die eine erste DRX-Einschaltdauer und eine erste DRX-Periodizität umfasst;
Mittel zum Empfangen einer DRX-Aktualisierungsanzeige in einem Rundfunkkanal, wobei die DRX-Aktualisierungsanzeige eine UE-spezifische Anzeige umfasst, ob eine DRX-Einschaltperiode zusätzlich zu einer Verzögerungsdauer verzögert ist;
Mittel zum Identifizieren einer DRX-Verzögerung zumindest teilweise auf der Grundlage der DRX-Aktualisierungsanzeige; und
Mittel zum Eintreten in einen DRX-Ein-Modus, der zumindest teilweise auf der DRX-Verzögerung basiert.

13. Eine Vorrichtung zur drahtlosen Kommunikation an einer Basisstation (105), umfassend
Mittel zum Identifizieren eines Satzes von einem oder mehreren Benutzerendgeräten, UEs, (115), die für eine Konfiguration mit diskontinuierlichem Empfang, DRX, konfiguriert sind;
Mittel zum Identifizieren einer DRX-Einschaltdauer, einer DRX-Periodizität oder einer DRX-Verzögerung, die zumindest teilweise auf dem Satz von einem oder mehreren UEs basieren; und
Mittel zum Übertragen einer DRX-Aktualisierungsanzeige auf einem Rundfunkkanal, die zumindest teilweise auf der DRX-Einschaltdauer, der DRX-Periodizität oder der DRX-Verzögerung basiert, wobei die DRX-Aktualisierungsanzeige eine UE-spezifische Anzeige umfasst, ob eine DRX-Einschaltperiode zusätzlich zu einer Verzögerungsdauer verzögert ist.

14. Ein Computerprogramm mit Befehlen zum Ausführen eines Verfahrens nach einem der Ansprüche 1 bis 11, wenn es auf mindestens einem Prozessor ausgeführt wird.

## Revendications

1. Un procédé (1600) de communication sans fil au niveau d'un équipement utilisateur, UE, (115), comprenant :
l'établissement (1605) d'une configuration de réception discontinue, DRX, comprenant une première durée d'activation de DRX et une première périodicité de DRX ;
la réception (1610) d'une indication de mise à jour de DRX sur un canal de broadcast, dans lequel l'indication de mise à jour de DRX comprend une indication spécifique à l'UE si une période d'activation de DRX est retardée en plus d'une durée de retard ;
l'identification (1615) d'un retard de DRX sur la base au moins en partie de l'indication de mise à jour de DRX ; et
le passage (1620) dans un mode d'activation de DRX sur la base au moins en partie du retard de DRX.

2. Le procédé selon la revendication 1, dans lequel
le canal de broadcast inclut un identificateur temporaire de réseau radio, RNTI, de groupe ou un espace de recherche commun.

3. Le procédé selon la revendication 2, comprenant en outre :
l'identification d'un groupe de séquencement de DRX, dans lequel le groupe de séquencement de DRX comprend une pluralité d'équipements utilisateurs, UE, et est identifié sur la base au moins en partie de l'identificateur temporaire de réseau radio, RNTI, de groupe ou de l'espace de recherche commun ; et
la surveillance du canal de broadcast sur la base au moins en partie du groupe de séquencement de DRX identifié.

4. Le procédé selon la revendication 1, comprenant en outre :
le passage dans un mode de désactivation de DRX sur la base au moins en partie de l'indication de mise à jour de DRX reçue.

5. Le procédé selon la revendication 1, dans lequel
le canal de broadcast inclut un ou plusieurs bits.

6. Le procédé selon la revendication 5, dans lequel
les un ou plusieurs bits indiquent le retard de DRX.

7. Le procédé selon la revendication 1, comprenant en outre :
la surveillance d'une autorisation spécifique à l'équipement utilisateur, UE, sur la base au moins en partie de la configuration de DRX, dans lequel le passage dans le mode d'activation de DRX est basé au moins en partie sur l'autorisation spécifique à l'UE.

8. Le procédé selon la revendication 1, dans lequel
l'autorisation spécifique à l'UE est au moins une parmi une autorisation de liaison montante et une autorisation de liaison descendante.

9. Le procédé selon la revendication 1, dans lequel
la configuration de DRX comprend une configuration d'émission discontinue, DTX.

10. Un procédé (1800) de communication sans fil au niveau d'une station de base (105), comprenant :
l'identification (1805) d'un ensemble d'un ou plusieurs équipements utilisateurs, UE, (115) qui sont configurés pour une configuration de réception discontinue, DRX ;
l'identification (1810) d'une durée d'activation de DRX, d'une périodicité de DRX ou d'un retard de DRX sur la base au moins en partie de l'ensemble d'un ou plusieurs UE ; et
la transmission (1815) d'une indication de mise à jour de DRX sur un canal de broadcast sur la base au moins en partie de la durée d'activation de DRX, de la périodicité de DRX ou du retard de DRX, dans lequel l'indication de mise à jour de DRX comprend une indication spécifique à l'UE si une période d'activation de DRX est retardée en plus d'une durée de retard.

11. Le procédé selon la revendication 10, comprenant en outre :
la détermination d'une condition de charge de ressource de contrôle, dans lequel l'indication de mise à jour de DRX est transmise sur la base au moins en partie de la condition de charge de ressource de contrôle.

12. Un appareil pour la communication sans fil au niveau d'un équipement utilisateur, UE, (115), comprenant :
un moyen pour établir une configuration de réception discontinue, DRX, comprenant une première durée d'activation de DRX et une première périodicité de DRX ;
un moyen pour recevoir une indication de mise à jour de DRX sur un canal de broadcast, dans lequel l'indication de mise à jour de DRX comprend une indication spécifique à l'UE si une période d'activation de DRX est retardée en plus d'une durée de retard ;
un moyen pour identifier un retard de DRX sur la base au moins en partie de l'indication de mise à jour de DRX ; et
un moyen pour passer dans un mode d'activation de DRX sur la base au moins en partie du retard de DRX.

13. Un appareil pour la communication sans fil au niveau d'une station de base (105), comprenant :
un moyen pour identifier un ensemble d'un ou plusieurs équipements utilisateurs, UE, (115) qui sont configurés pour une configuration de réception discontinue, DRX ;
un moyen pour identifier une durée d'activation de DRX, une périodicité de DRX ou un retard de DRX sur la base au moins en partie de l'ensemble d'un ou plusieurs UE ; et
un moyen pour transmettre une indication de mise à jour de DRX sur un canal de broadcast sur la base au moins en partie de la durée d'activation de DRX, de la périodicité de DRX ou du retard de DRX, dans lequel l'indication de mise à jour de DRX comprend une indication spécifique à l'UE si une période d'activation de DRX est retardée en plus d'une durée de retard.

14. Un programme informatique comprenant des instructions pour réaliser un procédé selon une des revendications 1 à 11, quand elles sont exécutées par au moins un processeur.
